# EUROPEAN PATENT APPLICATION

(11) **EP 4 615 110 A1**
(43) Date of publication of application: **10.09.2025**
(21) Application number: 22963899.4
(22) Date of filing: 02.11.2022
(51) Int. Cl.: H04W 72/12, H04L 5/00, H04W 72/04, H04L 27/00

(54) **COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/129377
(87) International publication number: WO 2024/092585

(57) **Abstract**

A communication method, apparatus and device, and a storage medium. The communication method comprises: receiving first information, which is sent by means of a network device, and determining N transmission configuration indication (TCI) states on the basis of the first information, wherein N is a positive integer; receiving second information, which is sent by means of the network device, and determining a mapping relationship between physical channels and/or reference signals and the N TCI states on the basis of the second information; and transmitting the physical channels and/or reference signals on the basis of the N TCI states and the mapping relationship. By means of a mapping relationship between physical channels and/or reference signals and a plurality of TCI states which is determined on the basis of second information, the corresponding TCI states are selected to transmit the physical channels and/or reference signals, such that the usage of the TCI states is kept consistent between a terminal and a network device, thereby improving the signal quality of performing multi-TRP transmission on the basis of the TCI states.

## Description

### TECHNICAL FIELD

The present disclosure relates to the field of communication technologies, and in particular to a communication method, apparatus, device and storage medium.

### BACKGROUND

In a New Radio (NR), when a communication frequency band is in Frequency Range 2, since a high-frequency channel attenuates quickly, it is required to use beam-based transmission and reception to ensure coverage.

Normally, for a physical downlink control channel (PDCCH), a PDCCH demodulation reference signal (DMRS), a physical uplink control channel (PUCCH), and/or a PUCCH DMRS, corresponding beams are respectively activated through a medium access control control element (MAC CE), while for a physical downlink shared channel (PDSCH), a PDSCH DMRS, a physical uplink shared channel (PUSCH), and/or a PUSCH DMRS, corresponding beams are respectively indicated through a downlink control information (DCI) signaling. A beam can be indicated by a transmission configuration indication (TCI) state or spatial-relation-info.

In some technologies, in order to reduce signaling overhead, it is proposed to use a unified TCI state, which can be used to indicate a TCI state used by the terminal to receive the PDCCH, the PDCCH DMRS, PDSCH, and/or PDSCH DMRS, or to indicate a TCI state used by the terminal to send the PUCCH, the PUCCH DMRS, the PUSCH, and/or the PUSCH DMRS.

However, currently only the unified TCI state for a single transmission and receiving point (TRP) is considered. That is, only one set of unified TCI states is considered. When there are multiple TRPs, how to indicate multiple sets of unified TCI states becomes an urgent problem to be solved.

### SUMMARY

In order to overcome the problems existing in the related art, the present disclosure provides a communication method, apparatus, and device, and a storage medium.

According to a first aspect of embodiments of the present disclosure, a communication method is provided. The method is performed by a terminal, and includes: receiving first information sent by a network device, and determining N transmission configuration indication (TCI) states based on the first information, where N is a positive integer; receiving second information sent by the network device, and determining a mapping relationship between a physical channel and/or a reference signal and the N TCI states based on the second information; and performing transmission of the physical channel and/or the reference signal based on the N TCI states and the mapping relationship.

According to a second aspect of embodiments of the present disclosure, a communication method is provided. The method is applied to a network device, and includes: sending first information to a terminal, the first information being used by the terminal to determine N TCI states, where N is a positive integer; sending second information to the terminal, the second information being used by the terminal to determine a mapping relationship between a physical channel and/or a reference signal and the N TCI states; and performing transmission of the physical channel and/or the reference signal based on the N TCI states and the mapping relationship.

According to a third aspect of embodiments of the present disclosure, a communication apparatus is provided. The apparatus is configured in a terminal, and includes: a receiving module, configured to receive first information sent by a network device; a determining module, configured to determine N TCI states based on the first information, wherein N is a positive integer; the receiving module being also configured to receive second information sent by the network device; the determining module being also configured to determine a mapping relationship between a physical channel and/or a reference signal and the N TCI states based on the second information; and a transmission module, configured to perform transmission of the physical channel and/or the reference signal based on the N TCI states and the mapping relationship.

According to a fourth aspect of embodiments of the present disclosure, a communication apparatus is provided. The apparatus is configured in a network device, and includes: a sending module, configured to send first information to a terminal, the first information being used by the terminal to determine N TCI states, where N is a positive integer; the sending module being also used to send second information to the terminal, the second information being used by the terminal to determine a mapping relationship between a physical channel and/or a reference signal and the N TCI states; and a transmission module, configured to perform transmission of the physical channel and/or the reference signal based on the N TCI states and the mapping relationship.

According to a fifth aspect of embodiments of the present disclosure, a communication device is provided. The device includes: a processor; a memory for storing instructions executable by the processor; in which the processor is configured to execute any one of the methods in the first aspect.

According to a sixth aspect of embodiments of the present disclosure, a communication device is provided. The device includes: a processor; a memory for storing instructions executable by the processor; in which the processor is configured to execute any one of the methods in the second aspect.

According to a seventh aspect of embodiments of the present disclosure, a non-transitory computer-readable storage medium is provided. When instructions in the storage medium are executed by a processor of a terminal, the terminal is enabled to execute any one of the methods in the first aspect.

According to an eighth aspect of embodiments of the present disclosure, a non-transitory computer-readable storage medium is provided. When instructions in the storage medium are executed by a processor of a network device, the network device is enabled to execute any one of the methods in the second aspect.

The technical solution provided by the embodiments of the present disclosure includes the following beneficial effects: through the mapping relationship between the physical channel and/or the reference signal and multiple TCI states determined by the second information, the corresponding TCI state is selected for the transmission of the physical channel and/or the reference signal, so that the terminal and the network device are consistent in use of the TCI state, thereby improving the signal quality of the multi-TRP transmission based on the TCI state.

It is to be understood that the foregoing general description and the following detailed description are exemplary and explanatory only and are not restrictive of the present disclosure.

### BRIEF DESCRIPTION OF THE DRAWINGS

The accompanying drawings, that are incorporated in and constitute a part of the specification, illustrate embodiments consistent with the present disclosure, and together with the description, serve to explain the principles of the present disclosure.
Fig. 1 is a schematic diagram of a wireless communication system according to an exemplary embodiment.
Fig. 2 is a flow chart of a communication method according to an exemplary embodiment.
Fig. 3 is a flow chart of another communication method according to an exemplary embodiment.
Fig. 4 is a flow chart of yet another communication method according to an exemplary embodiment.
Fig. 5 is a flow chart of yet another communication method according to an exemplary embodiment.
Fig. 6 is a schematic block diagram of a communication apparatus according to an exemplary embodiment.
Fig. 7 is a schematic block diagram of another communication apparatus according to an exemplary embodiment.
Fig. 8 is a schematic block diagram of a communication device according to an exemplary embodiment.
Fig. 9 is a schematic block diagram of another communication device according to an exemplary embodiment.

### DETAILED DESCRIPTION

Exemplary embodiments will be described in detail here, examples of which are shown in the accompanying drawings. When the following description refers to the drawings, unless otherwise indicated, the same numbers in different drawings represent the same or similar elements. Implementations described in the following exemplary embodiments do not represent all implementations consistent with the present disclosure.

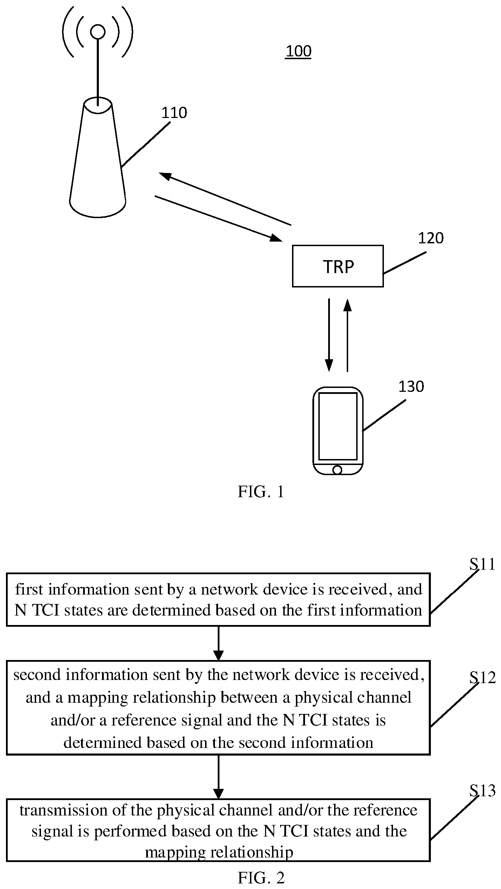

The communication methods involved in the present disclosure are applicable to a wireless communication system shown in Fig. 1. As can be seen from Fig. 1, the wireless communication system 100 may include a network device 110, a transmission reception point (TRP) 120, and a terminal 130. The network device 110, the TRP 120, and the terminal 130 may communicate through wireless resources, such as sending and receiving corresponding information.

It is understandable that the wireless communication system shown in Fig.1 is only for schematic illustration, and the wireless communication system may also include other network devices, such as a core network device, a wireless relay device, and a wireless backhaul device, which are not shown in Fig. 1. The embodiments of the present disclosure do not limit the number of network devices and terminals included in the wireless communication system.

It can be further understood that the wireless communication system of the embodiments of the present disclosure is a network that provides wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access with collision avoidance. According to the capacity, rate, delay and other factors of different networks, the network may be divided into a 2-generation (2G) network, a 3G network, a 4G network or any future evolution network, such as a 5G network, the 5G network may also be called an NR. For the convenience of description, the present disclosure sometimes refers to the wireless communication network as a network.

Furthermore, the network device 110 involved in the present disclosure may also be referred to as a wireless access network device or a core network device. The wireless access network device may be: a base station, an evolved node B (base station), a home base station, an access point (AP) in a wireless fidelity (WIFI) system, a wireless relay node, a wireless backhaul node, a transmission point (TP) or a TRP, etc. It may also be a next generation node B (gNB) in an NR system, or it may also be a component or a part of a device constituting a base station. When it is a vehicle-to-everything (V2X) communication system, the network device may also be a vehicle-mounted device. It should be understood that in the embodiments of the present disclosure, the specific technology and specific device form adopted by the network device are not limited.

Furthermore, the TRP 120 involved in the present disclosure may send beams in different directions to the terminal 130 for wireless communication.

Furthermore, the terminal 130 involved in the present disclosure may also be referred to as a terminal device, a user equipment (UE), a mobile station (MS), a mobile terminal (MT), etc., which is a device that provides voice and/or data connectivity to a user. For example, the terminal may be a handheld device with a wireless connection function, a vehicle-mounted device, etc. At present, some examples of terminals are: a mobile phone, a pocket personal computer (PPC), a handheld computer, a personal digital assistant (PDA), a laptop computer, a tablet computer, a wearable device, or a vehicle-mounted device, etc. In addition, when it is a vehicle-to-everything (V2X) communication system, the terminal device may also be a vehicle-mounted device. It should be understood that the specific technology and specific device form adopted by the terminal are not limited by the embodiments of the present disclosure.

In the embodiments of the present disclosure, the network device 110 and the terminal 130 may use any feasible wireless communication technology to achieve mutual data transmission. A transmission channel corresponding to data sent by the network device 110 to the terminal 130 is called a downlink channel (DL), and a transmission channel corresponding to data sent by the terminal 130 to the network device 110 is called an uplink channel (UL). It can be understood that the network device involved in the embodiments of the present disclosure may be a base station. Of course, the network device may also be any other possible network device, and the terminal may be any possible terminal, which are not limited by the present disclosure.

In the NR, when a communication frequency band is in Frequency Range 2, since a high-frequency channel attenuates quickly, it is required to use beam-based transmission and reception to ensure coverage.

In release (Rel) 16, beams used for the PDCCH, the PDCCH DMRS, the PDSCH, the PDSCH DMRS, the PUCCH, the PUCCH DMRS, the PUSCH, the PUSCH DMRS, and/or a reference signal are all independently indicated. The reference signal may include a channel state information reference signal (CSI-RS), a sounding reference signal (SRS), a positioning reference signal (PRS), a time-frequency tracking reference signal (TRS), and the like. For example, the CSI-RS may include a CSI-RS for channel state information measurement, a CSI-RS for beam measurement, or a CSI-RS for pathloss estimation. The SRS may include an SRS for codebook-based or non-codebook-based channel state information measurement, an SRS for beam measurement, or an SRS for positioning measurement.

Typically, for the PDCCH, the PDCCH DMRS, the PUCCH, and/or the PUCCH DMRS, corresponding beams are respectively activated through a MAC CE, while for the PDSCH, the PDSCH DMRS, the PUSCH, and/or the PUSCH DMRS, corresponding beams are respectively indicated through a DCI signaling. A beam can be indicated by a TCI state or spatial-relation-info.

In Rel-17, in order to reduce signaling overhead, it is proposed to use a unified TCI state. At present, the unified TCI state may be a separate indication for uplink and downlink, such as a DL TCI state and a UL TCI state. The unified TCI state may also be a joint indication for uplink and downlink, such as a joint TCI state. For example, if the network device indicates the DL TCI state for downlink, the DL TCI state may be used by the terminal for the PDSCH, the PDSCH DMRS, the PDCCH, and/or the PDCCH DMRS, and at least a part of the CSI-RS. The at least a part of the CSI-RS may be an aperiodic CSI-RS. For another example, if the network device indicates the UL TCI state for uplink, the UL TCI state may be used by the terminal for the PUSCH, the PUSCH DMRS, the PUCCH, and/or the PUCCH DMRS, and at least a part of the SRS. For another example, if the network device indicates the joint TCI state, the joint TCI state may be used for both uplink and downlink channels and/or the reference signal.

It can be understood that the TCI state may be used to indicate which receiving beam the terminal uses when receiving the PDCCH, the PDCCH DMRS, the PDSCH, and/or the PDSCH DMRS. For example, the receiving beam is same as one used by the terminal for receiving a synchronization signal block (SSB) or a CSI-RS sent by the network device. The TCI state can also be used to indicate which transmitting beam the terminal uses when sending the PUCCH, the PUCCH DMRS, the PUSCH, and/or the PUSCH DMRS. For example, the transmitting beam corresponds to a receiving beam for receiving an SSB or a CSI-RS sent by the network device, or the transmitting beam is same as one used by the terminal for transmitting an SRS. The beam refers to quasi co-location (QCL) type D.

The beam may be indicated by the TCI state or spatial-relation-info. A TCI state corresponding to the PDCCH includes a TCI state corresponding to the PDCCH and/or the PDCCH DMRS. That is, the TCI state is used for reception of the PDCCH and/or the PDCCH DMRS. Similarly, a TCI state corresponding to the PDSCH includes a TCI state corresponding to the PDSCH and/or the PDSCH DMRS. That is, the TCI state is used for reception of the PDSCH and/or the PDSCH DMRS. A TCI state or spatial-relation-info corresponding to the PUCCH includes a TCI state or spatial-relation-info corresponding to the PUCCH and/or the PUCCH DMRS. That is, the TCI state or spatial-relation-info is used for transmission of the PUCCH and/or the PUCCH DMRS. A TCI state or spatial-relation-info corresponding to the PUSCH includes a TCI state or spatial-relation-info corresponding to the PUSCH and/or the PUSCH DMRS. That is, the TCI state or spatial-relation-info is used for transmission of the PUSCH and/or the PUSCH DMRS.

However, currently Rel-17 only considers the unified TCI state for a single-TRP. That is, only one set of unified TCI states is considered for beam indication. For example, it may include the UL TCI state, the DL TCI state and/or the joint TCI state. When there is multi-TRP, how to indicate multiple sets of unified TCI states is a problem.

In Rel-18, assuming a single-DCI scenario, a MAC CE or a DCI can indicate one or more TCI states, such as the joint TCI state and/or the UL TCI state. In a case that physical channel and/or reference signal associated with two TCI states are configured, if only one TCI state is indicated, how should the physical channel and/or the reference signal be transmitted. In a case that physical channel and/or reference signal associated with one TCI state, if only another TCI state is indicated, how should the physical channel and/or the reference signal be transmitted. These are issues that need to be addressed.

Therefore, the present disclosure provides a communication method, which determines a mapping relationship between physical channel and/or reference signal and multiple TCI states through second information, corresponding TCI states are selected to transmit the physical channel and/or the reference signal, so that the terminal and the network device are consistent in use of the TCI state, thereby improving the signal quality of the multi-TRP transmission based on the TCI state.

Fig. 2 is a flow chart of a communication method according to an exemplary embodiment. As shown in Fig. 2, the method is performed by a terminal and may include the following steps.

In step S11, first information sent by a network device is received, and N TCI states are determined based on the first information.

In some embodiments, the terminal receives first information sent by the network device. The terminal may determine the N TCI states based on the first information, where N is a positive integer. It is understood that the first information may indicate the N TCI states.

In step S12, second information sent by the network device is received, and a mapping relationship between a physical channel and/or a reference signal and the N TCI states is determined based on the second information.

In some embodiments, the terminal receives the second information sent by the network device. The terminal may determine the mapping relationship between the physical channel and/or the reference signal and the N TCI states based on the second information.

For example, the physical channel may include a PUCCH, a PDCCH, a PUSCH and/or a PDSCH. The reference signal may include a PUCCH DMRS, a PDCCH DMRS, a PUSCH DMRS, a PDSCH DMRS, an SRS and/or a CSI-RS.

For another example, the mapping relationship may include a mapping relationship between the physical channel and the N TCI states; the mapping relationship may include a mapping relationship between the reference signal and the N TCI states; the mapping relationship may include the mapping relationship between the physical channel and the N TCI states, and the mapping relationship between the reference signal and the N TCI states.

For example, in a case that the physical channel and/or the reference signal is the PUCCH and/or the PUCCH DMRS, the mapping relationship may include a mapping relationship between the PUCCH and/or the PUCCH DMRS and N joint TCI states, and/or a mapping relationship between the PUCCH and/or the PUCCH DMRS and N UL TCI states.

For example, in a case that the physical channel and/or the reference signal is the PUSCH and/or the PUSCH DMRS, the mapping relationship may include a mapping relationship between the PUSCH and/or the PUSCH DMRS and N joint TCI states, and/or a mapping relationship between the PUSCH and/or the PUSCH DMRS and N UL TCI states.

For example, in a case that the physical channel and/or the reference signal is the PDSCH and/or the PDSCH DMRS, the mapping relationship may include a mapping relationship between the PDSCH and/or the PDSCH DMRS and N joint TCI states, and/or a mapping relationship between the PDSCH and/or the PDSCH DMRS and N DL TCI states.

For example, in a case that the physical channel and/or the reference signal is the PDCCH and/or the PDCCH DMRS, the mapping relationship may include a mapping relationship between the PDCCH and/or the PDCCH DMRS and N joint TCI states, and/or a mapping relationship between the PDCCH and/or the PDCCH DMRS and N DL TCI states.

For example, in a case that the reference signal is the CSI-RS, the mapping relationship may include a mapping relationship between the CSI-RS and N joint TCI states, and/or a mapping relationship between the CSI-RS and N DL TCI states.

For example, in a case that the reference signal is the SRS, the mapping relationship may include a mapping relationship between the SRS and N joint TCI states, and/or a mapping relationship between the SRS and N UL TCI states.

In step S13, transmission of the physical channel and/or the reference signal is performed based on the N TCI states and the mapping relationship.

In some embodiments, the terminal may perform the transmission of the physical channel and/or the reference signal based on the N TCI states determined in S11 and the mapping relationship determined in S12.

For example, the terminal performs the transmission of the physical channel and/or the reference signal using one or more TCI states among the N TCI states determined in S11 according to the mapping relationship determined in S12.

In the present disclosure, the mapping relationship between the physical channel and/or the reference signal and the multiple TCI states is determined through the second information, the corresponding TCI state is selected for performing the transmission of the physical channel and/or the reference signal, so that the terminal and the network device are consistent in use of the TCI state, thereby improving the signal quality of the multi-TRP transmission based on the TCI state.

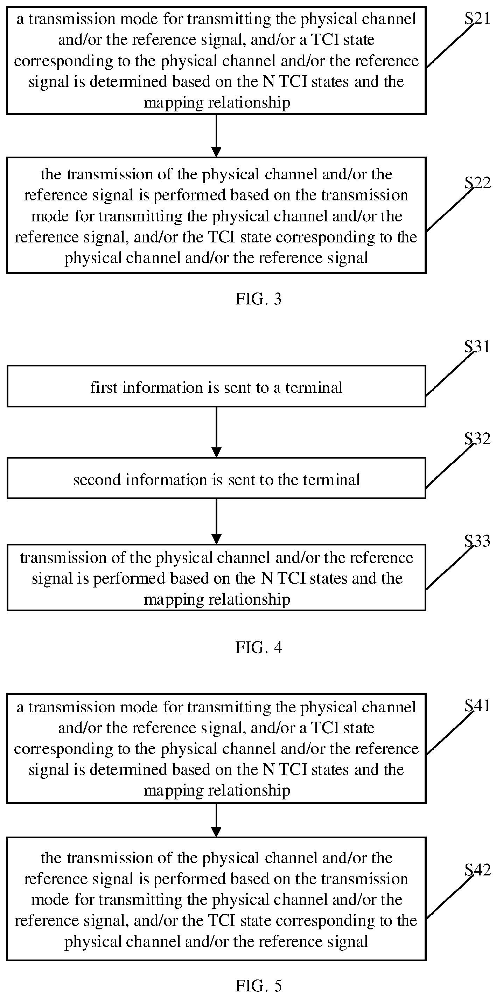

In the communication methods provided in the embodiments of the present disclosure, Fig. 3 is a flow chart of another communication method according to an exemplary embodiment. As shown in Fig. 3, performing the transmission of the physical channel and/or the reference signal based on the N TCI states and the mapping relationship in S13 may include the following steps.

In step S21, a transmission mode for transmitting the physical channel and/or the reference signal, and/or a TCI state corresponding to the physical channel and/or the reference signal is determined based on the N TCI states and the mapping relationship.

In some embodiments, the terminal determines the transmission mode for transmitting the physical channel and/or the reference signal based on the N TCI states determined in S11 and the mapping relationship determined in S12; and/or the terminal determines the TCI state corresponding to the physical channel and/or the reference signal based on the N TCI states determined in S11 and the mapping relationship determined in S12.

For example, the transmission mode for transmitting the physical channel and/or the reference signal may include transmitting or not transmitting the physical channel and/or the reference signal. The TCI state corresponding to the physical channel and/or the reference signal may indicate which TCI state is used for the transmission of the physical channel and/or the reference signal in response to transmitting the physical channel and/or the reference signal.

In step S22, the transmission of the physical channel and/or the reference signal is performed based on the transmission mode for transmitting the physical channel and/or the reference signal, and/or the TCI state corresponding to the physical channel and/or the reference signal.

In some embodiments, the terminal may perform the transmission of the physical channel and/or the reference signal based on the transmission mode for transmitting the physical channel and/or the reference signal and/or the TCI state corresponding to the physical channel and/or the reference signal determined in S21.

For example, the terminal adopts the TCI state corresponding to the physical channel and/or the reference signal, and performs the transmission of the physical channel and/or the reference signal according to the transmission mode for transmitting the physical channel and/or the reference signal.

In the present disclosure, the transmission mode for transmitting the physical channel and/or the reference signal, and/or the TCI state corresponding to the physical channel and/or the reference signal is determined through the first information and the second information, and thus the corresponding transmission mode and the TCI state are selected for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the N TCI states include at least one of: a first TCI state; or a second TCI state different from the first TCI state.

In some embodiments, the N TCI states may include the first TCI state.

In some embodiments, the N TCI states may include the second TCI state, in which the second TCI state is a TCI state different from the first TCI state.

It can be understood that, for the physical channel and/or the reference signal being an uplink channel and/or a reference signal, the N TCI states include a joint TCI state and/or a UL TCI state. That is, the first TCI state may be the joint TCI state or the UL TCI state, and the second TCI state may be the joint TCI state or the UL TCI state. The uplink channel and/or the reference signal includes at least one of the PUCCH, the PUCCH DMRS, the PUSCH, the PUSCH DMRS, or the SRS.

It can be understood that, for the physical channel and/or the reference signal being a downlink channel and/or a reference signal, the N TCI states include a joint TCI state and/or a DL TCI state. That is, the first TCI state may be the joint TCI state or the DL TCI state, and the second TCI state may be the joint TCI state or the DL TCI state. The downlink channel and/or the reference signal includes at least one of the PDCCH, the PDCCH DMRS, the PDSCH, the PDSCH DMRS, or the CSI-RS.

In the present disclosure, the configuration of at least two TCI states is provided, so as to determine the mapping relationship between the physical channel and/or the reference signal and the at least two TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the mapping relationship includes at least one of: a mapping relationship between the physical channel and/or the reference signal and the first TCI state; a mapping relationship between the physical channel and/or the reference signal and the second TCI state; or a mapping relationship between the physical channel and/or the reference signal and the first TCI state and the second TCI state.

In some embodiments, the mapping relationship includes the mapping relationship between the physical channel and/or the reference signal and the first TCI state. That is, the physical channel and/or the reference signal is associated with the first TCI state.

In some embodiments, the mapping relationship includes the mapping relationship between the physical channel and/or the reference signal and the second TCI state. That is, the physical channel and/or the reference signal is associated with the second TCI state.

In some embodiments, the mapping relationship includes the mapping relationship between the physical channel and/or the reference signal and the first TCI state and the second TCI state. That is, the physical channel and/or the reference signal is associated with the first TCI state and the second TCI state.

In the present disclosure, various mapping relationships are provided, which is applicable for configuring the mapping relationships between different TCI states and different physical channels and/or reference signals, the corresponding TCI state is selected for the transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through at least one of: a transmission method based on frequency division multiplexing (FDM); a transmission method based on time division multiplexing (TDM); a transmission method based on a demodulation reference signal (DMRS) port for at least two code division multiplexing (CDM) groups; a transmission method based on a single-frequency network (SFN); or a transmission method based on coherent joint transmission.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on FDM.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method based on FDM.

In some embodiments, the transmission method based on FDM refers to that frequency domain resources for n physical channel and/or reference signal occasions used to transmit 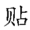 the physical channel and/or the reference signal are different, and the TCI states of the n physical channel and/or reference signal occasions are different. The transmission method based on FDM may include: FDM method A, or FDM method B.

For example, FDM method A may be that when the terminal is indicated with multiple TCI states, the terminal uses different TCI states on non-overlapping frequency domain resources, and transmits the physical channel and/or the reference signal on one physical channel and/or reference signal occasion. FDM method B may be that when the terminal is indicated with multiple TCI states, the terminal uses different TCI states on non-overlapping frequency domain resources, and transmits the physical channel and/or the reference signal respectively on multiple physical channel and/or reference signal occasions. In an exemplary case of FDM method B, the number of TCI states may be 2, and the number of physical channel and/or reference signal occasions may be 2.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on TDM.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method based on TDM.

In some embodiments, the transmission method based on TDM refers to that time domain resources for n physical channel and/or reference signal occasions used to transmit the physical channel and/or the reference signal are different, and the TCI states of the n physical channel and/or reference signal occasions may be different. The transmission method of TDM may include: repetition in the same slot; or repetition across different slots.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on the DMRS port for at least two CDM groups.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of the DMRS port for at least two CDM groups.

In some embodiments, the DMRS port used to transmit the physical channel and/or the reference signal corresponds to the at least two CDM groups, and TCI states corresponding to the at least two CDM groups are different.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through the transmission method of SFN.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of SFN.

In some embodiments, for the transmission method based on SFN, the TCI states used for transmission of the physical channel and/or the reference signal includes at least two TCI states, each TCI state includes a joint TCI state, a downlink TCI state or an uplink TCI state. When the transmission of the physical channel and/or the reference signal is configured to be performed through the transmission method based on SFN, time domain resources and frequency domain resources used for transmitting the physical channel and/or the reference signal are the same, and the DMRS port used to transmit the physical channel and/or the reference signal is the same. The transmission method of SFN may include: SFN method A, or SFN method B.

For example, in SFN method A, in response to indicating at least two TCI states, the terminal assumes that the DMRS port used to transmit the physical channel and/or the reference signal is quasi co-located with the reference signal corresponding to the at least two TCI states. In SFN method B, in response to indicating at least two TCI states, the terminal assumes that the DMRS port used to transmit the physical channel and/or the reference signal is quasi co-located with the reference signal corresponding to the at least two TCI states, except for a part of quasi co-location parameters of the second TCI state, such as doppler shift and doppler spread of the second TCI state. That is, in SFN method B, the quasi co-location parameters being quasi co-located with the reference signal corresponding to the at least two TCI states may include all quasi co-location parameters of the first TCI state, and quasi co-location parameters of the second TCI state other than the Doppler shift and Doppler spread.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through the transmission method of coherent joint transmission.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of coherent joint transmission.

In the present disclosure, when there is the mapping relationship between the physical channel and/or the reference signal and the multiple TCI states, the corresponding TCI state can be selected in a variety of ways to perform the transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the physical channel being a PUSCH and/or a PDSCH, determining, based on the N TCI states and the mapping relationship, the transmission mode for transmitting the physical channel and/or the reference signal, and/or the TCI state corresponding to the physical channel and/or the reference signal, includes at least one of: in response to the second information being carried by first DCI and the first information indicating one TCI state, not expecting by the terminal the second information to indicate a mapping relationship between the physical channel and/or the reference signal and multiple TCI states; in response to the second information indicating the mapping relationship between the physical channel and/or the reference signal and the first TCI state, and the first information indicating the second TCI state, determining that the terminal does not transmit the PUSCH and/or the PDSCH, or determining that the terminal uses a historical first TCI state to transmit the PUSCH and/or the PDSCH, in which the historical first TCI state is a first TCI state determined by historical first information, and the historical first information is other first information received before receiving the first information; in response to the second information indicating the mapping relationship between the physical channel and/or the reference signal and the first TCI state and the second TCI state, and the first information indicating the second TCI state, determining that the terminal does not transmit the PUSCH and/or the PDSCH, or determining that the terminal transmits the PUSCH and/or the PDSCH based on the second TCI state, or determining that the terminal uses the historical first TCI state and the second TCI state to transmit the PUSCH and/or the PDSCH.

In some embodiments, in response to the physical channel being the PUSCH and/or the PDSCH, and the second information being carried by the first DCI and the first information indicating one TCI state, the terminal does not expect the second information to indicate the mapping relationship between the physical channel and/or the reference signal and the multiple TCI states.

That is, when the physical channel is the PUSCH and/or the PDSCH, the second information is carried by the first DCI, and the first information indicates only one TCI state, the DCI for the second information will only indicate the mapping relationship between the physical channel and/or the reference signal and one TCI state, and will not indicate the mapping relationship between the physical channel and/or the reference signal and the multiple TCI states. For example, "multiple" is two.

For example, in a case that the physical channel is the PUSCH and the second information is carried by the first DCI, when the first information only indicates a joint TCI state or a UL TCI state, the first DCI will only indicate the mapping relationship between the physical channel and/or the reference signal and one TCI state, and will not indicate the mapping relationship between the physical channel and/or the reference signal and the multiple TCI states. For example, "multiple" is two. For another example, in a case that the physical channel is the PDSCH and the second information is carried by the first DCI, when the first information only indicates a joint TCI state or a DL TCI state, the first DCI will only indicate the mapping relationship between the physical channel and/or the reference signal and one TCI state, and will not indicate the mapping relationship between the physical channel and/or the reference signal and the multiple TCI states. For example, "multiple" is two.

In some embodiments, in response to the physical channel being the PUSCH and/or the PDSCH, the second information indicating the mapping relationship between the physical channel and/or the reference signal and the first TCI state, and the first information indicating the second TCI state, the terminal may determine not to transmit the PUSCH and/or the PDSCH; or the terminal may determine to transmit the PUSCH and/or the PDSCH using the historical first TCI state. The historical first TCI state is the first TCI state determined by the historical first information, and the historical first information is other first information received before receiving the first information. For example, the historical first information is last first information received before receiving the first information.

It can be understood that the above case mainly describes the TCI state, having the mapping relationship with the physical channel and/or the reference signal indicated by the second information, is different from the TCI state indicated by the first information. In this case, assuming that the TCI state having the mapping relationship with the physical channel and/or the reference signal indicated by the second information is the first TCI state, the terminal may use the historical first TCI state to transmit the PUSCH and/or the PDSCH. The historical first TCI state is represented by the first TCI state determined by the terminal through the other first information received most recently before receiving the first information.

In some embodiments, in response to the physical channel being the PUSCH and/or the PDSCH, the second information indicating the mapping relationship between the physical channel and/or the reference signal and the first TCI state and the second TCI state, and the first information indicating the second TCI state, the terminal may determine not to transmit the PUSCH and/or the PDSCH; or the terminal may determine to transmit the PUSCH and/or the PDSCH based on the second TCI state; or the terminal may determine to transmit the PUSCH and/or the PDSCH using the historical first TCI state and the second TCI state.

It can be understood that the above case mainly describes that the second information indicates that the physical channel and/or the reference signal has the mapping relationship with the multiple TCI states, and the TCI state indicated by the first information is only one of the multiple TCI states.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the first DCI, the physical channel includes at least one of: a PUSCH triggered based on DCI format 0_1 or DCI format 0_2; a configured grant (CG) type 2 PUSCH activated based on DCI format 0_1 or DCI format 0_2; a PDSCH triggered based on DCI format 1_0, DCI format 1_1, or DCI format 1_2.

In some embodiments, in response to the second information being carried by the first DCI, the physical channel may be the PUSCH triggered based on DCI format 0_1 or DCI format 0_2]

In some embodiments, in response to the second information being carried by the first DCI, the physical channel may be the CG type 2 PUSCH activated based on DCI format 0_1 or DCI format 0_2.

In some embodiments, in response to the second information being carried by the first DCI, the physical channel may be the PDSCH triggered based on DCI format 1_0, DCI format 1_1, or DCI format 1_2.

The present disclosure is applicable to a variety of different PUSCH and PDSCH scenarios, and the corresponding TCI state can be selected for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state, and the first information indicating the second TCI state, the second information is carried by at least one of: a first radio resource control (RRC); a first MAC CE; or a second DCI.

In some embodiments, in response to the second information indicating the mapping relationship between the physical channel and/or the reference signal and the first TCI state, and the first information indicating the second TCI state, the second information may be carried by the first RRC.

In some embodiments, in response to the second information indicating the mapping relationship between the physical channel and/or the reference signal and the first TCI state, and the first information indicating the second TCI state, the second information may be carried by the first MAC CE.

In some embodiments, in response to the second information indicating the mapping relationship between the physical channel and/or the reference signal and the first TCI state, and the first information indicating the second TCI state, the second information may be carried by the second DCI.

The present disclosure provides a variety of manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the first RRC and/or the first MAC CE, the second information configures information for the PUSCH, the information including at least one of: one piece of sounding reference signal (SRS) resource indication information; one field layer; one precoding information and number of layers; one transmitted precoding matrix indicator (TPMI); one SRS resource set; one pathloss reference signal; or one power control parameter set.

It can be understood that the above-mentioned at least one information configured for the PUSCH by the second information can indicate that the PUSCH is associated with only one TCI state.

In some embodiments, in response to the second information being carried by the first RRC and/or the first MAC CE, the second information configures one piece of SRS resource indication information for the PUSCH.

In some embodiments, in response to the second information being carried by the first RRC and/or the first MAC CE, the second information configures one field layer for the PUSCH.

In some embodiments, in response to the second information being carried by the first RRC and/or the first MAC CE, the second information configures one precoding information and number of layers for the PUSCH.

In some embodiments, in response to the second information being carried by the first RRC and/or the first MAC CE, the second information configures one TPMI for the PUSCH.

In some embodiments, in response to the second information being carried by the first RRC and/or the first MAC CE, the second information configures one SRS resource set for the PUSCH.

In some embodiments, in response to the second information being carried by the first RRC and/or the first MAC CE, the second information configures one pathloss reference signal for the PUSCH.

In some embodiments, in response to the second information being carried by the first RRC and/or the first MAC CE, the second information configures one power control parameter set for the PUSCH.

In some embodiments, the PUSCH involved in the present disclosure may be a CG type 1 PUSCH.

In the present disclosure, the second information configures various parameters for the PUSCH so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the second DCI, the second information indicating the mapping relationship between the physical channel and/or the reference signal and the first TCI state includes at least one of: the second information determining a mapping relationship between the PUSCH and one or two TCI states based on SRS resource set indication information in DCI format 0_1 or DCI format 0_2, in which the SRS resource set indication information corresponds to one or two SRS resource sets; the second information determining the mapping relationship between the PDSCH and one or two TCI states based on a TCI association field in DCI format 1_0, DCI format 1_1 or DCI format 1_2.

In some embodiments, in response to the second information being carried by the second DCI, the second information may determine the mapping relationship between the PUSCH and one or two TCI states based on the SRS resource set indication information in DCI format 0_1 or DCI format 0_2. The SRS resource set indication information corresponds to one or two SRS resource sets. For example, if the SRS resource set indication information corresponds to a first SRS resource set, it means that PUSCH is associated with the first TCI state; if the SRS resource set indication information corresponds to a second SRS resource set, it means that PUSCH is associated with the second TCI state; if the SRS resource set indication information corresponds to the first SRS resource set and the second SRS resource set, it means that PUSCH is associated with the first TCI state and the second TCI state.

In some embodiments, in response to the second information being carried by the second DCI, the second information may determine the mapping relationship between the PDSCH and one or two TCI states based on the TCI association field in DCI format 1_0, DCI format 1_1, or DCI format 1_2. It can be understood that the TCI association field is mainly used to carry the mapping relationship between the physical channel and/or signal and the TCI state. For example, the TCI association field may indicate that the PDSCH is associated with the first TCI state, or the TCI association field may indicate that the PDSCH is associated with the second TCI state, or the TCI association field may indicate that the PDSCH is associated with the first TCI state and the second TCI state.

The present disclosure provides various types of DCIs for determining the mapping relationship, so as to select corresponding TCI states for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state and the second TCI state, and the first information indicating the second TCI state, the second information is carried by at least one of: a second RRC; a second MAC CE; or a third DCI.

In some embodiments, in response to the second information indicating the mapping relationship between the physical channel and/or the reference signal and the first TCI state and the second TCI state, and the first information indicating the second TCI state, the second information may be carried by the second RRC.

In some embodiments, in response to the second information indicating the mapping relationship between the physical channel and/or the reference signal and the first TCI state and the second TCI state, and the first information indicating the second TCI state, the second information may be carried by the second MAC CE.

In some embodiments, in response to the second information indicating the mapping relationship between the physical channel and/or the reference signal and the first TCI state and the second TCI state, and the first information indicating the second TCI state, the second information may be carried by the third DCI.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the second RRC and/or the second MAC CE, the second information configures information for the PUSCH, the information including at least one of: one piece of SRS resource set indication information; two pieces of SRS resource indication information; two field layers; two precoding information and number of layers; two TPMIs; two SRS resource sets; two pathloss reference signals; or two power control parameter sets.

It can be understood that the above-mentioned at least one information configured for the PUSCH by the second information can indicate that the PUSCH is associated with two TCI states.

In some embodiments, in response to the second information being carried by the second RRC and/or the second MAC CE, the second information configures one piece of SRS resource set indication information for the PUSCH.

In some embodiments, in response to the second information being carried by the second RRC and/or the second MAC CE, the second information configures two pieces of SRS resource indication information for the PUSCH.

In some embodiments, in response to the second information being carried by the second RRC and/or the second MAC CE, the second information configures two field layers for the PUSCH.

In some embodiments, in response to the second information being carried by the second RRC and/or the second MAC CE, the second information configures two precoding information and number of layers for the PUSCH.

In some embodiments, in response to the second information being carried by the second RRC and/or the second MAC CE, the second information configures two TPMIs for the PUSCH.

In some embodiments, in response to the second information being carried by the second RRC and/or the second MAC CE, the second information configures two SRS resource sets for the PUSCH.

In some embodiments, in response to the second information being carried by the second RRC and/or the second MAC CE, the second information configures two pathloss reference signals for the PUSCH.

In some embodiments, in response to the second information being carried by the second RRC and/or the second MAC CE, the second information configures two power control parameter sets for the PUSCH.

In the present disclosure, the second information configures various parameters for the PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PUSCH is a CG type 1 PUSCH.

In some embodiments, the PUSCH involved in the present disclosure may be the CG type 1 PUSCH.

The present disclosure is applicable to the case of CG type 1 PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the third DCI, the second information indicating the mapping relationship between the physical channel and/or the reference signal and the first TCI state and the second TCI state includes at least one of: the second information determining a mapping relationship between the PUSCH and the first TCI state and the second TCI state based on SRS resource set indication information in DCI format 0_1 or DCI format 0_2, in which the SRS resource set indication information corresponds to two SRS resource sets; or the second information determining a mapping relationship between the PDSCH and the first TCI state and the second TCI state based on a TCI association field in DCI format 1_0, DCI format 1_1, or DCI format 1_2.

In some embodiments, in response to the second information being carried by the third DCI, the second information may determine the mapping relationship between the PUSCH and the first TCI state and the second TCI state based on the SRS resource set indication information in DCI format 0_1 or DCI format 0_2. The SRS resource set indication information corresponds to two SRS resource sets.

In some embodiments, in response to the second information being carried by the third DCI, the second information may determine the mapping relationship between the PDSCH and the first TCI state and the second TCI state based on the TCI association field in DCI format 1_0, DCI format 1_1, or DCI format 1_2.

The present disclosure provides various types of DCI for determining the mapping relationship, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PUSCH includes at least one of: a PUSCH triggered based on DCI format 0_1 or DCI format 0_2; or a CG type 2 PUSCH activated based on DCI format 0_1 or DCI format 0_2.

In some embodiments, the PUSCH involved in the present disclosure may be the PUSCH triggered based on DCI format 0_1 or DCI format 0_2.

In some embodiments, the PUSCH involved in the present disclosure may be the CG type 2 PUSCH activated based on DCI format 0_1 or DCI format 0_2.

The present disclosure is applicable to various PUSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PDSCH includes at least one of: a PDSCH triggered based on DCI format 1_0, a PDSCH triggered based on DCI format 1_1 or a PDSCH triggered based on DCI format 1_2.

In some embodiments, the PDSCH involved in the present disclosure may be the PDSCH triggered based on DCI format 1_0, DCI format 1_1 or DCI format 1_2.

The present disclosure is applicable to various PDSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the physical channel being a PUCCH and/or a PDCCH, determining, based on the N TCI states and the mapping relationship, the transmission mode for transmitting the physical channel and/or the reference signal, and/or the TCI state corresponding to the physical channel and/or the reference signal, includes at least one of: in response to the second information indicating the mapping relationship between the physical channel and/or the reference signal and the first TCI state, and the first information indicating the second TCI state, determining that the terminal does not transmit the PUCCH and/or the PDCCH, or determining that the terminal uses a historical first TCI state to transmit the PUCCH and/or the PDCCH, in which the historical first TCI state is a first TCI state determined by the historical first information, and the historical first information is other first information received before receiving the first information; or in response to the second information indicating the mapping relationship between the physical channel and/or the reference signal and the first TCI state and the second TCI state, and the first information indicating the second TCI state, determining that the terminal does not transmit the PUCCH and/or the PDCCH, or determining that the terminal transmits the PUCCH and/or the PDCCH based on the second TCI state, or determining that the terminal uses the historical first TCI state and the second TCI state to transmit the PUCCH and/or the PDCCH.

In some embodiments, in response to the physical channel being the PUCCH and/or the PDCCH, the second information indicating the mapping relationship between the physical channel and/or the reference signal and the first TCI state, and the first information indicating the second TCI state, the terminal may determine not to transmit the PUCCH and/or the PDCCH; or the terminal may determine to transmit the PUCCH and/or the PDCCH using the historical first TCI state. The historical first TCI state is the first TCI state determined by the historical first information, and the historical first information is other first information received before receiving the first information. For example, the historical first information is other first information received most recently before receiving the first information.

It can be understood that the above case mainly describes the TCI state, having the mapping relationship with the physical channel and/or the reference signal indicated by the second information, is different from the TCI state indicated by the first information. In this case, assuming that the TCI state having the mapping relationship with the physical channel and/or the reference signal indicated by the second information is the first TCI state, the terminal may use the historical first TCI state to transmit the PUCCH and/or the PDCCH. The historical first TCI state is represented by the first TCI state determined by the terminal through other first information received most recently before receiving the first information.

In some embodiments, in response to the physical channel being the PUCCH and/or the PDCCH, the second information indicating the mapping relationship between the physical channel and/or the reference signal and the first TCI state and the second TCI state, and the first information indicating the second TCI state, the terminal may determine not to transmit the PUCCH and/or the PDCCH; or the terminal may determine to transmit the PUCCH and/or the PDCCH based on the second TCI state; or the terminal may determine that the terminal uses the historical first TCI state and the second TCI state to transmit the PUCCH and/or the PDCCH.

It can be understood that the above case mainly describes that the second information indicates that there is the mapping relationship between the physical channel and/or the reference signal and the multiple TCI states, and the TCI state indicated by the first information is only one of the multiple TCI states.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state, and the first information indicating the second TCI state, the second information is carried by at least one of: a third RRC; or a third MAC CE.

In some embodiments, in response to the second information indicating the mapping relationship between the physical channel and/or the reference signal and the first TCI state, and the first information indicating the second TCI state, the second information may be carried by the third RRC.

In some embodiments, in response to the second information indicating the mapping relationship between the physical channel and/or the reference signal and the first TCI state, and the first information indicating the second TCI state, the second information may be carried by the third MAC CE.

In some embodiments, the mapping relationship between the PDCCH and the TCI state may be indicated by the third RRC.

For example, the third RRC indicates that a certain control resource set (CORESET) or CORESET group is associated with the first TCI state, or the third RRC indicates that a certain CORESET or CORESET group is associated with the second TCI, or the third RRC indicates that a certain CORESET or CORESET group is associated with the first TCI state and the second TCI state, or the third RRC indicates that a certain CORESET or CORESET group is neither associated with the first TCI state nor the second TCI state.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by an embodiments of the present disclosure, in response to the second information being carried by the third RRC and/or the third MAC CE, the second information configures information for the PUCCH, the information including at least one of: one piece of spatial-relation-info; one TCI state; one power control parameter set; one SRS resource set; or one pathloss reference signal.

It can be understood that the above-mentioned at least one information configured for the PUCCH by the second information can indicate that the PUCCH is associated with only one TCI state.

In some embodiments, in response to the second information being carried by the third RRC and/or the third MAC CE, the second information configures one piece of spatial-relation-info for the PUCCH.

In some embodiments, in response to the second information being carried by the third RRC and/or the third MAC CE, the second information configures one TCI state for the PUCCH.

For example, it may include an uplink TCI state or a joint TCI state.

In some embodiments, in response to the second information being carried by the third RRC and/or the third MAC CE, the second information configures one power control parameter set for the PUCCH.

In some embodiments, in response to the second information being carried by the third RRC and/or the third MAC CE, the second information configures one SRS resource set for the PUCCH.

In some embodiments, in response to the second information being carried by the third RRC and/or the third MAC CE, the second information configures one pathloss reference signal for the PUCCH.

In some embodiments, the third RRC and/or the third MAC CE may indicate that a certain PUCCH resource or PUCCH resource group is associated with the first TCI state, or the third RRC and/or the third MAC CE may indicate that a certain PUCCH resource or PUCCH resource group is associated with the second TCI, or the third RRC and/or the third MAC CE may indicate that a certain PUCCH resource or PUCCH resource group is associated with the first TCI state and the second TCI state, or the third RRC and/or the third MAC CE may indicate that a certain PUCCH resource or PUCCH resource group is associated with neither the first TCI state nor the second TCI state.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or reference signal and the first TCI state and the second TCI state, and the first information indicating the second TCI state, the second information is carried by at least one of: a fourth RRC; or a fourth MAC CE.

In some embodiments, in response to the second information indicating the mapping relationship between the physical channel and/or reference signal and the first TCI state and the second TCI state, and the first information indicating the second TCI state, the second information may be carried by the fourth RRC.

In some embodiments, in response to the second information indicating the mapping relationship between the physical channel and/or reference signal and the first TCI state and the second TCI state, and the first information indicating the second TCI state, the second information may be carried by the fourth MAC CE.

In some embodiments, the mapping relationship between the PDCCH and the TCI state may be indicated by the fourth RRC.

For example, the fourth RRC indicates that a certain CORESET or CORESET group is associated with the first TCI state, or the fourth RRC indicates that a certain CORESET or CORESET group is associated with the second TCI, or the fourth RRC indicates that a certain CORESET or CORESET group is associated with the first TCI state and the second TCI state, or the fourth RRC indicates that a certain CORESET or CORESET group is associated with neither the first TCI state nor the second TCI state.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the fourth RRC and/or the fourth MAC CE, the second information configures information for the PUCCH, the information including at least one of: two pieces of spatial-relation-info; two TCI states; two power control parameter sets; two SRS resource sets; or two pathloss reference signals.

It can be understood that the above-mentioned at least one information configured for the PUCCH by the second information can indicate that the PUCCH is associated with two TCI states.

In some embodiments, in response to the second information being carried by the fourth RRC and/or the fourth MAC CE, the second information configures two pieces of spatial-relation-info for the PUCCH.

In some embodiments, in response to the second information being carried by the fourth RRC and/or the fourth MAC CE, the second information configures two TCI states for the PUCCH.

In some embodiments, in response to the second information being carried by the fourth RRC and/or the fourth MAC CE, the second information configures two power control parameter sets for the PUCCH.

In some embodiments, in response to the second information being carried by the fourth RRC and/or the fourth MAC CE, the second information configures two SRS resource sets for the PUCCH.

In some embodiments, in response to the second information being carried by the fourth RRC and/or the fourth MAC CE, the second information configures two pathloss reference signals for the PUCCH.

In some embodiments, the fourth RRC and/or the fourth MAC CE may indicate that a certain PUCCH resource or PUCCH resource group is associated with the first TCI state, or the fourth RRC and/or the fourth MAC CE may indicate that a certain PUCCH resource or PUCCH resource group is associated with the second TCI, or the fourth RRC and/or the fourth MAC CE may indicate that a certain PUCCH resource or PUCCH resource group is associated with the first TCI state and the second TCI state, or the fourth RRC and/or the fourth MAC CE may indicate that a certain PUCCH resource or PUCCH resource group is associated with neither the first TCI state nor the second TCI state.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the first information is carried by a fifth MAC CE, or the first information is carried by a sixth MAC CE and a fourth DCI.

In some embodiments, the first information is carried by the fifth MAC CE.

In some embodiments, the first information is carried by the sixth MAC CE and the fourth DCI.

The present disclosure provides various manners for carrying the first information, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the first information being carried by the fifth MAC CE, the fifth MAC CE is used to indicate the N TCI states, and the N TCI states correspond to one codepoint in a TCI indication field in a DCI.

In some embodiments, in response to the first information being carried by the fifth MAC CE, the fifth MAC CE is used to indicate the N TCI states, in which the N TCI states correspond to one codepoint in the TCI indication field in the DCI.

For example, the N TCI states include an uplink TCI state, a downlink TCI state and/or a joint TCI state.

In the present disclosure, the first information can indicate the codepoint of the TCI indication field in the DCI through the MAC CE, thereby determining the multiple TCI states, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

In some embodiments, in response to the first information being carried by the sixth MAC CE and the fourth DCI, the sixth MAC CE is used to indicate the TCI states respectively corresponding to the multiple codepoints in the TCI indication field in the DCI, and the TCI indication field in the fourth DCI is used to indicate one codepoint among the multiple codepoints.

It can be understood that the sixth MAC CE can indicate the TCI states respectively corresponding to the multiple codepoints, and the fourth DCI indicates one codepoint among the multiple codepoints, so as to determine the multiple TCI states corresponding to the corresponding codepoint.

In the present disclosure, the first information can indicate the multiple TCI states corresponding to one codepoint through the MAC CE and the DCI together, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the N TCI states are used to determine a quasi co-location relationship between the physical channel and/or a DMRS corresponding to the physical channel and the reference signal.

In some embodiments, the N TCI states may be used to determine the quasi co-location relationship between the physical channel and/or the DMRS corresponding to the physical channel and the reference signal. For example, QCL assumptions of a PDSCH, a PDCCH, a PUCCH, a PUSCH, a DMRS corresponding to the PDSCH, a DMRS corresponding to the PDCCH, a DMRS corresponding to the PUCCH, and a DMRS corresponding to the PUSCH are determined. Also, QCL assumptions of a non-zero power (NZP) CSI-RS and an SRS are determined.

For example, if the TCI state is an uplink TCI state, the QCL assumptions of the PUCCH, the PUSCH, the DMRS corresponding to the PUCCH, the DMRS corresponding to the PUSCH, and the QCL assumption of the SRS may be determined.

For example, if the TCI state is a downlink TCI state, the QCL assumptions of the PDCCH, the PDSCH, the DMRS corresponding to the PDCCH, the DMRS corresponding to the PDSCH, and the QCL assumption of the CSI-RS may be determined.

In the present disclosure, the quasi co-location relationship between physical channel and/or reference signal can be determined through the TCI state, so as to transmit the physical channel and/or the reference signal.

Based on the same concept, the present disclosure also provides a communication method performed by a network device.

Fig. 4 is a flow chart of another communication method according to an exemplary embodiment. As shown in Fig. 4, the method is performed by a network device and may include the following steps.

In step S31, first information is sent to a terminal.

In some embodiments, the network device sends the first information to the terminal. The first information is used by the terminal to determine N TCI states, where N is a positive integer. It can be understood that the first information can indicate the N TCI states.

In step S32, second information is sent to the terminal.

In some embodiments, the network device sends the second information to the terminal. The second information is used by the terminal to determine a mapping relationship between a physical channel and/or a reference signal and the N TCI states.

For example, the physical channel may include a PUCCH, a PDCCH, a PUSCH and/or a PDSCH. The reference signal may include a PUCCH DMRS, a PDCCH DMRS, a PUSCH DMRS, a PDSCH DMRS, an SRS and/or a CSI-RS.

For another example, the mapping relationship may include a mapping relationship between the physical channel and the N TCI states; the mapping relationship may include a mapping relationship between the reference signal and the N TCI states; the mapping relationship may include a mapping relationship between the physical channel and the N TCI states, and a mapping relationship between the reference signal and the N TCI states.

For example, in a case that the physical channel and/or the reference signal is the PUCCH and/or the PUCCH DMRS, the mapping relationship may include a mapping relationship between the PUCCH and/or the PUCCH DMRS and N joint TCI states, and/or a mapping relationship between the PUCCH and/or the PUCCH DMRS and N UL TCI states.

For example, in a case that the physical channel and/or the reference signal is the PUSCH and/or the PUSCH DMRS, the mapping relationship may include a mapping relationship between the PUSCH and/or the PUSCH DMRS and N joint TCI states, and/or a mapping relationship between the PUSCH and/or the PUSCH DMRS and N UL TCI states.

For example, in a case that the physical channel and/or the reference signal is the PDSCH and/or the PDSCH DMRS, the mapping relationship may include a mapping relationship between the PDSCH and/or the PDSCH DMRS and N joint TCI states, and/or a mapping relationship between the PDSCH and/or the PDSCH DMRS and N DL TCI states.

For example, in a case that the physical channel and/or the reference signal is the PDCCH and/or the PDCCH DMRS, the mapping relationship may include a mapping relationship between the PDCCH and/or the PDCCH DMRS and N joint TCI states, and/or a mapping relationship between the PDCCH and/or the PDCCH DMRS and N DL TCI states.

For example, in a case that the reference signal is the CSI-RS, the mapping relationship may include a mapping relationship between the CSI-RS and N joint TCI states, and/or a mapping relationship between the CSI-RS and N DL TCI states.

For example, in a case that the reference signal is the SRS, the mapping relationship may include a mapping relationship between the SRS and N joint TCI states, and/or a mapping relationship between the SRS and N UL TCI states.

In step S33, transmission of the physical channel and/or the reference signal is performed based on the N TCI states and the mapping relationship.

In some embodiments, the network device may perform the transmission of the physical channel and/or the reference signal with the terminal based on the N TCI states determined in S31 and the mapping relationship determined in S32.

For example, the network device performs the transmission of the physical channel and/or the reference signal with the terminal using one or more TCI states among the N TCI states determined in S31 according to the mapping relationship determined in S32.

In the present disclosure, the mapping relationship between the physical channel and/or the reference signal and the multiple TCI states is determined through the second information, the corresponding TCI state is selected for performing the transmission of the physical channel and/or the reference signal, so that the terminal and the network device are consistent in use of the TCI state, thereby improving the signal quality of the multi-TRP transmission based on the TCI state.

In the communication methods provided in the embodiments of the present disclosure, Fig. 5 is a flow chart of another communication method according to an exemplary embodiment. As shown in Fig. 5, performing the transmission of the physical channel and/or the reference signal based on the N TCI states and the mapping relationship in S33 may include the following steps.

In step S41, a transmission mode for transmitting the physical channel and/or the reference signal, and/or a TCI state corresponding to the physical channel and/or the reference signal is determined based on the N TCI states and the mapping relationship.

In some embodiments, the network device determines the transmission mode for transmitting the physical channel and/or the reference signal based on the N TCI states determined in S31 and the mapping relationship determined in S32; and/or the network device determines the TCI state corresponding to the physical channel and/or the reference signal based on the N TCI states determined in S31 and the mapping relationship determined in S32.

For example, the transmission mode for transmitting the physical channel and/or the reference signal may include transmitting or not transmitting the physical channel and/or the reference signal. The TCI state corresponding to the physical channel and/or the reference signal may indicate which TCI state is used for the transmission of the physical channel and/or the reference signal in response to transmitting the physical channel and/or the reference signal.

In step S42, the transmission of the physical channel and/or the reference signal is performed based on the transmission mode for transmitting the physical channel and/or the reference signal, and/or the TCI state corresponding to the physical channel and/or the reference signal.

In some embodiments, the network device may perform the transmission of the physical channel and/or the reference signal based on the transmission mode for transmitting the physical channel and/or the reference signal and/or the TCI state corresponding to the physical channel and/or the reference signal determined in S41.

For example, the network device adopts the TCI state corresponding to the physical channel and/or the reference signal, and performs the transmission of the physical channel and/or the reference signal with the terminal according to the transmission mode for transmitting the physical channel and/or the reference signal.

In the present disclosure, the transmission mode for transmitting the physical channel and/or the reference signal, and/or the TCI state corresponding to the physical channel and/or the reference signal is determined through the first information and the second information, and thus the corresponding transmission mode and the TCI state are selected for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the N TCI states include at least one of: a first TCI state; or a second TCI state different from the first TCI state.

In some embodiments, the N TCI states may include the first TCI state.

In some embodiments, the N TCI states may include the second TCI state, in which the second TCI state is a TCI state different from the first TCI state.

It can be understood that, for the physical channel and/or the reference signal being an uplink channel and/or a reference signal, the N TCI states include a joint TCI state and/or a UL TCI state. That is, the first TCI state may be the joint TCI state or the UL TCI state, and the second TCI state may be the joint TCI state or the UL TCI state. The uplink channel and/or the reference signal includes at least one of the PUCCH, the PUCCH DMRS, the PUSCH, the PUSCH DMRS, or the SRS.

It can be understood that, for the physical channel and/or the reference signal being a downlink channel and/or a reference signal, the N TCI states include a joint TCI state and/or a DL TCI state. That is, the first TCI state may be the joint TCI state or the DL TCI state, and the second TCI state may be the joint TCI state or the DL TCI state. The downlink channel and/or the reference signal includes at least one of the PDCCH, the PDCCH DMRS, the PDSCH, the PDSCH DMRS, or the CSI-RS.

In the present disclosure, the configuration of at least two TCI states is provided, so as to determine the mapping relationship between the physical channel and/or the reference signal and the at least two TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the mapping relationship includes at least one of: a mapping relationship between the physical channel and/or the reference signal and the first TCI state; a mapping relationship between the physical channel and/or the reference signal and the second TCI state; or a mapping relationship between the physical channel and/or the reference signal and the first TCI state and the second TCI state.

In some embodiments, the mapping relationship includes the mapping relationship between the physical channel and/or the reference signal and the first TCI state. That is, the physical channel and/or the reference signal is associated with the first TCI state.

In some embodiments, the mapping relationship includes the mapping relationship between the physical channel and/or the reference signal and the second TCI state. That is, the physical channel and/or the reference signal is associated with the second TCI state.

In some embodiments, the mapping relationship includes the mapping relationship between the physical channel and/or the reference signal and the first TCI state and the second TCI state. That is, the physical channel and/or the reference signal is associated with the first TCI state and the second TCI state.

In the present disclosure, various mapping relationships are provided, which is applicable for configuring the mapping relationships between different TCI states and different physical channels and/or reference signals, the corresponding TCI state is selected for the transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through at least one of: a transmission method based on frequency division multiplexing (FDM); a transmission method based on time division multiplexing (TDM); a transmission method based on a demodulation reference signal (DMRS) port for at least two code division multiplexing (CDM) groups; a transmission method based on a single-frequency network (SFN); or a transmission method based on coherent joint transmission.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on FDM.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method based on FDM.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on TDM.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method based on TDM.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through the transmission method based on the DMRS port for at least two CDM groups.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of the DMRS port for at least two CDM groups.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through the transmission method of SFN.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of SFN.

In some embodiments, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through the transmission method of coherent joint transmission.

For example, in response to the mapping relationship being the mapping relationship between the physical channel and/or the reference signal and the first TCI state and the second TCI state, when performing the transmission based on the transmission mode for transmitting the physical channel and/or the reference signal, and/or the TCI state corresponding to the physical channel and/or the reference signal, since the first TCI state and the second TCI state may be used for transmission, the transmission may be performed using the first TCI state and the second TCI state through the transmission method of coherent joint transmission.

In the present disclosure, when there is the mapping relationship between the physical channel and/or the reference signal and the multiple TCI states, the corresponding TCI state can be selected in a variety of ways to perform the transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the physical channel being a PUSCH and/or a PDSCH, determining, based on the N TCI states and the mapping relationship, the transmission mode for transmitting the physical channel and/or the reference signal, and/or the TCI state corresponding to the physical channel and/or the reference signal, includes at least one of: in response to the second information being carried by first DCI and the first information indicating one TCI state, the second information not indicating a mapping relationship between the physical channel and/or the reference signal and multiple TCI states; in response to the second information indicating the mapping relationship between the physical channel and/or the reference signal and the first TCI state, and the first information indicating the second TCI state, determining that the network device does not transmit the PUSCH and/or the PDSCH, or determining that the network device uses a historical first TCI state to transmit the PUSCH and/or the PDSCH, in which the historical first TCI state is a first TCI state determined by historical first information, and the historical first information is other first information sent before sending the first information; in response to the second information indicating the mapping relationship between the physical channel and/or the reference signal and the first TCI state and the second TCI state, and the first information indicating the second TCI state, determining that the network device does not transmit the PUSCH and/or the PDSCH, or determining that the network device transmits the PUSCH and/or the PDSCH based on the second TCI state, or determining that the network device uses the historical first TCI state and the second TCI state to transmit the PUSCH and/or the PDSCH.

In some embodiments, in response to the physical channel being the PUSCH and/or the PDSCH, and the second information being carried by the first DCI and the first information indicating one TCI state, the second information does not indicate the mapping relationship between the physical channel and/or the reference signal and the multiple TCI states.

That is, when the physical channel is the PUSCH and/or the PDSCH, the second information is carried by the first DCI, and the first information indicates only one TCI state, the DCI for the second information will only indicate the mapping relationship between the physical channel and/or the reference signal and one TCI state, and will not indicate the mapping relationship between the physical channel and/or the reference signal and the multiple TCI states. For example, "multiple" is two.

For example, in a case that the physical channel is the PUSCH and the second information is carried by the first DCI, when the first information only indicates a joint TCI state or a UL TCI state, the first DCI will only indicate the mapping relationship between the physical channel and/or the reference signal and one TCI state, and will not indicate the mapping relationship between the physical channel and/or the reference signal and the multiple TCI states. For example, "multiple" is two. For another example, in a case that the physical channel is the PDSCH and the second information is carried by the first DCI, when the first information only indicates a joint TCI state or a DL TCI state, the first DCI will only indicate the mapping relationship between the physical channel and/or the reference signal and one TCI state, and will not indicate the mapping relationship between the physical channel and/or the reference signal and the multiple TCI states. For example, "multiple" is two.

In some embodiments, in response to the physical channel being the PUSCH and/or the PDSCH, the second information indicating the mapping relationship between the physical channel and/or the reference signal and the first TCI state, and the first information indicating the second TCI state, the network device may determine not to transmit the PUSCH and/or the PDSCH; or the network device may determine to transmit the PUSCH and/or the PDSCH using the historical first TCI state. The historical first TCI state is the first TCI state determined by the historical first information, and the historical first information is other first information sent before sending the first information. For example, the historical first information is last first information sent before sending the first information.

It can be understood that the above case mainly describes the TCI state, having the mapping relationship with the physical channel and/or the reference signal indicated by the second information, is different from the TCI state indicated by the first information. In this case, assuming that the TCI state having the mapping relationship with the physical channel and/or the reference signal indicated by the second information is the first TCI state, the network device may use the historical first TCI state to transmit the PUSCH and/or the PDSCH. The historical first TCI state is represented by the first TCI state determined by the network device through the other first information sent most recently before sending the first information.

In some embodiments, in response to the physical channel being the PUSCH and/or the PDSCH, the second information indicating the mapping relationship between the physical channel and/or the reference signal and the first TCI state and the second TCI state, and the first information indicating the second TCI state, the network device may determine not to transmit the PUSCH and/or the PDSCH; or the network device may determine to transmit the PUSCH and/or the PDSCH based on the second TCI state; or the network device may determine to transmit the PUSCH and/or the PDSCH using the historical first TCI state and the second TCI state.

It can be understood that the above case mainly describes that the second information indicates that the physical channel and/or the reference signal has the mapping relationship with the multiple TCI states, and the TCI state indicated by the first information is only one of the multiple TCI states.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the first DCI, the physical channel includes at least one of: a PUSCH triggered based on DCI format 0_1 or DCI format 0_2; a configured grant (CG) type 2 PUSCH activated based on DCI format 0_1 or DCI format 0_2; a PDSCH triggered based on DCI format 1_0, DCI format 1_1, or DCI format 1_2.

In some embodiments, in response to the second information being carried by the first DCI, the physical channel may be the PUSCH triggered based on DCI format 0_1 or DCI format 0_2.

In some embodiments, in response to the second information being carried by the first DCI, the physical channel may be the CG type 2 PUSCH activated based on DCI format 0_1 or DCI format 0_2.

In some embodiments, in response to the second information being carried by the first DCI, the physical channel may be the PDSCH triggered based on DCI format 1_0, DCI format 1_1, or DCI format 1_2.

The present disclosure is applicable to a variety of different PUSCH and PDSCH scenarios, and the corresponding TCI state can be selected for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state, and the first information indicating the second TCI state, the second information is carried in at least one of: a first RRC; a first MAC CE; or a second DCI.

In some embodiments, in response to the second information indicating the mapping relationship between the physical channel and/or the reference signal and the first TCI state, and the first information indicating the second TCI state, the second information may be carried by the first RRC.

In some embodiments, in response to the second information indicating the mapping relationship between the physical channel and/or the reference signal and the first TCI state, and the first information indicating the second TCI state, the second information may be carried by the first MAC CE.

In some embodiments, in response to the second information indicating the mapping relationship between the physical channel and/or the reference signal and the first TCI state, and the first information indicating the second TCI state, the second information may be carried by the second DCI.

The present disclosure provides a variety of manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the first RRC and/or the first MAC CE, the second information configures information for the PUSCH, the information including at least one of: one piece of SRS resource indication information; one field layer; one precoding information and number of layers; one TPMI; one SRS resource set; one pathloss reference signal; or one power control parameter set.

It can be understood that the above-mentioned at least one information configured for the PUSCH by the second information can indicate that the PUSCH is associated with only one TCI state.

In some embodiments, in response to the second information being carried by the first RRC and/or the first MAC CE, the second information configures one piece of SRS resource indication information for the PUSCH.

In some embodiments, in response to the second information being carried by the first RRC and/or the first MAC CE, the second information configures one field layer for the PUSCH.

In some embodiments, in response to the second information being carried by the first RRC and/or the first MAC CE, the second information configures one precoding information and number of layers for the PUSCH.

In some embodiments, in response to the second information being carried by the first RRC and/or the first MAC CE, the second information configures one TPMI for the PUSCH.

In some embodiments, in response to the second information being carried by the first RRC and/or the first MAC CE, the second information configures one SRS resource set for the PUSCH.

In some embodiments, in response to the second information being carried by the first RRC and/or the first MAC CE, the second information configures one pathloss reference signal for the PUSCH.

In some embodiments, in response to the second information being carried by the first RRC and/or the first MAC CE, the second information configures one power control parameter set for the PUSCH.

In some embodiments, the PUSCH involved in the present disclosure may be a CG type 1 PUSCH.

In the present disclosure, the second information configures various parameters for the PUSCH so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the second DCI, the second information indicating the mapping relationship between the physical channel and/or the reference signal and the first TCI state includes at least one of: the second information determining a mapping relationship between the PUSCH and one or two TCI states based on SRS resource set indication information in DCI format 0_1 or DCI format 0_2, in which the SRS resource set indication information corresponds to one or two SRS resource sets; the second information determining the mapping relationship between the PDSCH and one or two TCI states based on a TCI association field in DCI format 1_0, DCI format 1_1 or DCI format 1_2.

In some embodiments, in response to the second information being carried by the second DCI, the second information may determine the mapping relationship between the PUSCH and one or two TCI states based on the SRS resource set indication information in DCI format 0_1 or DCI format 0_2. The SRS resource set indication information corresponds to one or two SRS resource sets. For example, if the SRS resource set indication information corresponds to a first SRS resource set, it means that PUSCH is associated with the first TCI state; if the SRS resource set indication information corresponds to a second SRS resource set, it means that PUSCH is associated with the second TCI state; if the SRS resource set indication information corresponds to the first SRS resource set and the second SRS resource set, it means that PUSCH is associated with the first TCI state and the second TCI state.

In some embodiments, in response to the second information being carried by the second DCI, the second information may determine the mapping relationship between the PDSCH and one or two TCI states based on the TCI association field in DCI format 1_0, DCI format 1_1, or DCI format 1_2. It can be understood that the TCI association field is mainly used to carry the mapping relationship between the physical channel and/or signal and the TCI state.

The present disclosure provides various types of DCIs for determining the mapping relationship, so as to select corresponding TCI states for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state and the second TCI state, and the first information indicating the second TCI state, the second information is carried by at least one of: a second RRC; a second MAC CE; or a third DCI.

In some embodiments, in response to the second information indicating the mapping relationship between the physical channel and/or the reference signal and the first TCI state and the second TCI state, and the first information indicating the second TCI state, the second information may be carried by the second RRC.

In some embodiments, in response to the second information indicating the mapping relationship between the physical channel and/or the reference signal and the first TCI state and the second TCI state, and the first information indicating the second TCI state, the second information may be carried by the second MAC CE.

In some embodiments, in response to the second information indicating the mapping relationship between the physical channel and/or the reference signal and the first TCI state and the second TCI state, and the first information indicating the second TCI state, the second information may be carried by the third DCI.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the second RRC and/or the second MAC CE, the second information configures information for the PUSCH, the information including at least one of: one piece of SRS resource set indication information; two pieces of SRS resource indication information; two field layers; two precoding information and number of layers; two TPMIs; two SRS resource sets; two pathloss reference signals; or two power control parameter sets.

It can be understood that the above-mentioned at least one information configured for the PUSCH by the second information can indicate that the PUSCH is associated with two TCI states.

In some embodiments, in response to the second information being carried by the second RRC and/or the second MAC CE, the second information configures one piece of SRS resource set indication information for the PUSCH.

In some embodiments, in response to the second information being carried by the second RRC and/or the second MAC CE, the second information configures two pieces of SRS resource indication information for the PUSCH.

In some embodiments, in response to the second information being carried by the second RRC and/or the second MAC CE, the second information configures two field layers for the PUSCH.

In some embodiments, in response to the second information being carried by the second RRC and/or the second MAC CE, the second information configures two precoding information and number of layers for the PUSCH.

In some embodiments, in response to the second information being carried by the second RRC and/or the second MAC CE, the second information configures two TPMIs for the PUSCH.

In some embodiments, in response to the second information being carried by the second RRC and/or the second MAC CE, the second information configures two SRS resource sets for the PUSCH.

In some embodiments, in response to the second information being carried by the second RRC and/or the second MAC CE, the second information configures two pathloss reference signals for the PUSCH.

In some embodiments, in response to the second information being carried by the second RRC and/or the second MAC CE, the second information configures two power control parameter sets for the PUSCH.

In the present disclosure, the second information configures various parameters for the PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PUSCH is a CG type 1 PUSCH.

In some embodiments, the PUSCH involved in the present disclosure may be the CG type 1 PUSCH.

The present disclosure is applicable to the case of CG type 1 PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the third DCI, the second information indicating the mapping relationship between the physical channel and/or the reference signal and the first TCI state and the second TCI state includes at least one of: the second information determining a mapping relationship between the PUSCH and the first TCI state and the second TCI state based on SRS resource set indication information in DCI format 0_1 or DCI format 0_2, in which the SRS resource set indication information corresponds to two SRS resource sets; or the second information determining a mapping relationship between the PDSCH and the first TCI state and the second TCI state based on a TCI association field in DCI format 1_0, DCI format 1_1, or DCI format 1_2.

In some embodiments, in response to the second information being carried by the third DCI, the second information may determine the mapping relationship between the PUSCH and the first TCI state and the second TCI state based on the SRS resource set indication information in DCI format 0_1 or DCI format 0_2. The SRS resource set indication information corresponds to two SRS resource sets.

In some embodiments, in response to the second information being carried by the third DCI, the second information may determine the mapping relationship between the PDSCH and the first TCI state and the second TCI state based on the TCI association field in DCI format 1_0, DCI format 1_1, or DCI format 1_2.

The present disclosure provides various types of DCI for determining the mapping relationship, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PUSCH includes at least one of: a PUSCH triggered based on DCI format 0_1 or DCI format 0_2; or a CG type 2 PUSCH activated based on DCI format 0_1 or DCI format 0_2.

In some embodiments, the PUSCH involved in the present disclosure may be the PUSCH triggered based on DCI format 0_1 or DCI format 0_2.

In some embodiments, the PUSCH involved in the present disclosure may be the CG type 2 PUSCH activated based on DCI format 0_1 or DCI format 0_2.

The present disclosure is applicable to various PUSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the PDSCH includes at least one of: a PDSCH triggered based on DCI format 1_0, a PDSCH triggered based on DCI format 1_1 or a PDSCH triggered based on DCI format 1_2.

In some embodiments, the PDSCH involved in the present disclosure may be the PDSCH triggered based on DCI format 1_0, DCI format 1_1 or DCI format 1_2.

The present disclosure is applicable to various PDSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the physical channel being a PUCCH and/or a PDCCH, determining, based on the N TCI states and the mapping relationship, the transmission mode for transmitting the physical channel and/or the reference signal, and/or the TCI state corresponding to the physical channel and/or the reference signal, includes at least one of: in response to the second information indicating the mapping relationship between the physical channel and/or the reference signal and the first TCI state, and the first information indicating the second TCI state, determining that the network device does not transmit the PUCCH and/or the PDCCH, or determining that the network device uses a historical first TCI state to transmit the PUCCH and/or the PDCCH, in which the historical first TCI state is a first TCI state determined by the historical first information, and the historical first information is other first information sent before sending the first information; or in response to the second information indicating the mapping relationship between the physical channel and/or the reference signal and the first TCI state and the second TCI state, and the first information indicating the second TCI state, determining that the network device does not transmit the PUCCH and/or the PDCCH, or determining that the network device transmits the PUCCH and/or the PDCCH based on the second TCI state, or determining that the network device uses the historical first TCI state and the second TCI state to transmit the PUCCH and/or the PDCCH.

In some embodiments, in response to the physical channel being the PUCCH and/or the PDCCH, the second information indicating the mapping relationship between the physical channel and/or the reference signal and the first TCI state, and the first information indicating the second TCI state, the network device may determine not to transmit the PUCCH and/or the PDCCH; or the network device may determine to transmit the PUCCH and/or the PDCCH using the historical first TCI state. The historical first TCI state is the first TCI state determined by the historical first information, and the historical first information is other first information sent before sending the first information. For example, the historical first information is other first information sent most recently before sending the first information.

It can be understood that the above case mainly describes the TCI state, having the mapping relationship with the physical channel and/or the reference signal indicated by the second information, is different from the TCI state indicated by the first information. In this case, assuming that the TCI state having the mapping relationship with the physical channel and/or the reference signal indicated by the second information is the first TCI state, the network device may use the historical first TCI state to transmit the PUCCH and/or the PDCCH. The historical first TCI state is represented by the first TCI state determined by the network device through other first information sent most recently before sending the first information.

In some embodiments, in response to the physical channel being the PUCCH and/or the PDCCH, the second information indicating the mapping relationship between the physical channel and/or the reference signal and the first TCI state and the second TCI state, and the first information indicating the second TCI state, the network device may determine not to transmit the PUCCH and/or the PDCCH; or the network device may determine to transmit the PUCCH and/or the PDCCH based on the second TCI state; or the network device may determine that the network device uses the historical first TCI state and the second TCI state to transmit the PUCCH and/or the PDCCH.

It can be understood that the above case mainly describes that the second information indicates that there is the mapping relationship between the physical channel and/or the reference signal and the multiple TCI states, and the TCI state indicated by the first information is only one of the multiple TCI states.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or the reference signal and the first TCI state, and the first information indicating the second TCI state, the second information is carried by at least one of: a third RRC; or a third MAC CE.

In some embodiments, in response to the second information indicating the mapping relationship between the physical channel and/or the reference signal and the first TCI state, and the first information indicating the second TCI state, the second information may be carried by the third RRC.

In some embodiments, in response to the second information indicating the mapping relationship between the physical channel and/or the reference signal and the first TCI state, and the first information indicating the second TCI state, the second information may be carried by the third MAC CE.

In some embodiments, the mapping relationship between the PDCCH and the TCI state may be indicated by the third RRC.

For example, the third RRC indicates that a certain CORESET or CORESET group is associated with the first TCI state, or the third RRC indicates that a certain CORESET or CORESET group is associated with the second TCI, or the third RRC indicates that a certain CORESET or CORESET group is associated with the first TCI state and the second TCI state, or the third RRC indicates that a certain CORESET or CORESET group is neither associated with the first TCI state nor the second TCI state.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by an embodiments of the present disclosure, in response to the second information being carried by the third RRC and/or the third MAC CE, the second information configures information for the PUCCH, the information including at least one of: one piece of spatial-relation-info; one TCI state; one power control parameter set; one SRS resource set; or one pathloss reference signal.

It can be understood that the above-mentioned at least one information configured for the PUCCH by the second information can indicate that the PUCCH is associated with only one TCI state.

In some embodiments, in response to the second information being carried by the third RRC and/or the third MAC CE, the second information configures one piece of spatial-relation-info for the PUCCH.

In some embodiments, in response to the second information being carried by the third RRC and/or the third MAC CE, the second information configures one TCI state for the PUCCH.

For example, it may include an uplink TCI state or a joint TCI state.

In some embodiments, in response to the second information being carried by the third RRC and/or the third MAC CE, the second information configures one power control parameter set for the PUCCH.

In some embodiments, in response to the second information being carried by the third RRC and/or the third MAC CE, the second information configures one SRS resource set for the PUCCH.

In some embodiments, in response to the second information being carried by the third RRC and/or the third MAC CE, the second information configures one pathloss reference signal for the PUCCH.

In some embodiments, the third RRC and/or the third MAC CE may indicate that a certain PUCCH resource or PUCCH resource group is associated with the first TCI state, or the third RRC and/or the third MAC CE may indicate that a certain PUCCH resource or PUCCH resource group is associated with the second TCI, or the third RRC and/or the third MAC CE may indicate that a certain PUCCH resource or PUCCH resource group is associated with the first TCI state and the second TCI state, or the third RRC and/or the third MAC CE may indicate that a certain PUCCH resource or PUCCH resource group is associated with neither the first TCI state nor the second TCI state.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information indicating the mapping relationship between the physical channel and/or reference signal and the first TCI state and the second TCI state, and the first information indicating the second TCI state, the second information is carried by at least one of: a fourth RRC; or a fourth MAC CE.

In some embodiments, in response to the second information indicating the mapping relationship between the physical channel and/or reference signal and the first TCI state and the second TCI state, and the first information indicating the second TCI state, the second information may be carried by the fourth RRC.

In some embodiments, in response to the second information indicating the mapping relationship between the physical channel and/or reference signal and the first TCI state and the second TCI state, and the first information indicating the second TCI state, the second information may be carried by the fourth MAC CE.

In some embodiments, the mapping relationship between the PDCCH and the TCI state may be indicated by the fourth RRC.

For example, the fourth RRC indicates that a certain CORESET or CORESET group is associated with the first TCI state, or the fourth RRC indicates that a certain CORESET or CORESET group is associated with the second TCI, or the fourth RRC indicates that a certain CORESET or CORESET group is associated with the first TCI state and the second TCI state, or the fourth RRC indicates that a certain CORESET or CORESET group is associated with neither the first TCI state nor the second TCI state.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the second information being carried by the fourth RRC and/or the fourth MAC CE, the second information configures information for the PUCCH, the information including at least one of: two pieces of spatial-relation-info; two TCI states; two power control parameter sets; two SRS resource sets; or two pathloss reference signals.

It can be understood that the above-mentioned at least one information configured for the PUCCH by the second information can indicate that the PUCCH is associated with two TCI states.

In some embodiments, in response to the second information being carried by the fourth RRC and/or the fourth MAC CE, the second information configures two pieces of spatial-relation-info for the PUCCH.

In some embodiments, in response to the second information being carried by the fourth RRC and/or the fourth MAC CE, the second information configures two TCI states for the PUCCH.

In some embodiments, in response to the second information being carried by the fourth RRC and/or the fourth MAC CE, the second information configures two power control parameter sets for the PUCCH.

In some embodiments, in response to the second information being carried by the fourth RRC and/or the fourth MAC CE, the second information configures two SRS resource sets for the PUCCH.

In some embodiments, in response to the second information being carried by the fourth RRC and/or the fourth MAC CE, the second information configures two pathloss reference signals for the PUCCH.

In some embodiments, the fourth RRC and/or the fourth MAC CE may indicate that a certain PUCCH resource or PUCCH resource group is associated with the first TCI state, or the fourth RRC and/or the fourth MAC CE may indicate that a certain PUCCH resource or PUCCH resource group is associated with the second TCI, or the fourth RRC and/or the fourth MAC CE may indicate that a certain PUCCH resource or PUCCH resource group is associated with the first TCI state and the second TCI state, or the fourth RRC and/or the fourth MAC CE may indicate that a certain PUCCH resource or PUCCH resource group is associated with neither the first TCI state nor the second TCI state.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the first information is carried by a fifth MAC CE, or the first information is carried by a sixth MAC CE and a fourth DCI.

In some embodiments, the first information is carried by the fifth MAC CE.

In some embodiments, the first information is carried by the sixth MAC CE and the fourth DCI.

The present disclosure provides various manners for carrying the first information, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the first information being carried by the fifth MAC CE, the fifth MAC CE is used to indicate the N TCI states, and the N TCI states correspond to one codepoint in a TCI indication field in a DCI.

In some embodiments, in response to the first information being carried by the fifth MAC CE, the fifth MAC CE is used to indicate the N TCI states, in which the N TCI states correspond to one codepoint in the TCI indication field in the DCI.

For example, the N TCI states include an uplink TCI state, a downlink TCI state and/or a joint TCI state.

In the present disclosure, the first information can indicate the codepoint of the TCI indication field in the DCI through the MAC CE, thereby determining the multiple TCI states, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

In some embodiments, in response to the first information being carried by the sixth MAC CE and the fourth DCI, the sixth MAC CE is used to indicate the TCI states respectively corresponding to the multiple codepoints in the TCI indication field in the DCI, and the TCI indication field in the fourth DCI is used to indicate one codepoint among the multiple codepoints.

It can be understood that the sixth MAC CE can indicate the TCI states respectively corresponding to the multiple codepoints, and the fourth DCI indicates one codepoint among the multiple codepoints, so as to determine the multiple TCI states corresponding to the corresponding codepoint.

In the present disclosure, the first information can indicate the multiple TCI states corresponding to one codepoint through the MAC CE and the DCI together, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In the communication methods provided by these embodiments of the present disclosure, the N TCI states are used to determine a quasi co-location relationship between the physical channel and/or a DMRS corresponding to the physical channel and the reference signal.

In some embodiments, the N TCI states may be used to determine the quasi co-location relationship between the physical channel and/or the DMRS corresponding to the physical channel and the reference signal. For example, QCL assumptions of a PDSCH, a PDCCH, a PUCCH, a PUSCH, a DMRS corresponding to the PDSCH, a DMRS corresponding to the PDCCH, a DMRS corresponding to the PUCCH, and a DMRS corresponding to the PUSCH are determined. Also, QCL assumptions of a non-zero power (NZP) CSI-RS and an SRS are determined.

For example, if the TCI state is an uplink TCI state, the QCL assumptions of the PUCCH, the PUSCH, the DMRS corresponding to the PUCCH, the DMRS corresponding to the PUSCH, and the QCL assumption of the SRS may be determined.

For example, if the TCI state is a downlink TCI state, the QCL assumptions of the PDCCH, the PDSCH, the DMRS corresponding to the PDCCH, the DMRS corresponding to the PDSCH, and the QCL assumption of the CSI-RS may be determined.

In the present disclosure, the quasi co-location relationship between physical channel and/or reference signal can be determined through the TCI state, so as to transmit the physical channel and/or the reference signal.

It should be noted that persons skilled in the art may understand that the various embodiments/implementations mentioned above in the embodiments of the present disclosure may be used in conjunction with the above-mentioned embodiments or may be used independently. Whether used alone or in conjunction with the aforementioned embodiments, the implementation principle is similar. Some embodiments of the present disclosure are illustrated by embodiments used together. Of course, those skilled in the art may understand that such examples are not a limitation of the embodiments of the present disclosure.

Based on the same concept, the embodiments of the present disclosure also provide a communication apparatus and a communication device.

It is understandable that the communication apparatus and the communication device provided by the embodiments of the present disclosure include hardware structures and/or software modules corresponding to the execution of respective functions in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of the embodiments of the present disclosure.

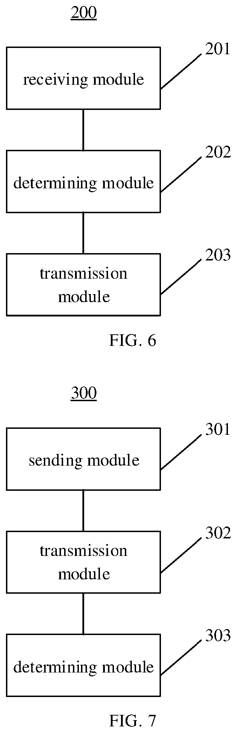

Fig. 6 is a schematic block diagram of a communication apparatus according to an exemplary embodiment. Referring to Fig. 6, the apparatus 200 is configured in a terminal, and the apparatus 200 includes: a receiving module 201, which is configured to receive first information sent by a network device; a determining module 202, which is configured to determine N TCI states based on the first information, where N is a positive integer; the receiving module 201 being also configured to receive the second information sent by the network device; the determining module 202 being also used to determine a mapping relationship between a physical channel and/or a reference signal and the N TCI states based on the second information; and a transmission module 203, configured to transmit the physical channel and/or the reference signal based on the N TCI states and the mapping relationship.

In the present disclosure, the mapping relationship between the physical channel and/or the reference signal and the multiple TCI states is determined through the second information, the corresponding TCI state is selected for performing the transmission of the physical channel and/or the reference signal, so that the terminal and the network device are consistent in use of the TCI state, thereby improving the signal quality of the multi-TRP transmission based on the TCI state.

In an implementation, the determining module 202 is also configured to determine a transmission mode for transmitting the physical channel and/or the reference signal, and/or a TCI state corresponding to the physical channel and/or the reference signal based on the N TCI states and the mapping relationship; the transmission module 203 is also configured to perform the transmission of the physical channel and/or the reference signal based on the transmission mode for transmitting the physical channel and/or the reference signal, and/or the TCI state corresponding to the physical channel and/or the reference signal.

In the present disclosure, the transmission mode for transmitting the physical channel and/or the reference signal, and/or the TCI state corresponding to the physical channel and/or the reference signal is determined through the first information and the second information, and thus the corresponding transmission mode and the TCI state are selected for transmission of the physical channel and/or the reference signal, so that the terminal and the network device are consistent in use of the TCI state, thereby improving the signal quality of the multi-TRP transmission based on the TCI state.

In an implementation, the N TCI states include at least one of: a first TCI state; or a second TCI state different from the first TCI state.

In the present disclosure, the configuration of at least two TCI states is provided, so as to determine the mapping relationship between the physical channel and/or the reference signal and the at least two TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the mapping relationship includes at least one of: a mapping relationship between the physical channel and/or the reference signal and the first TCI state; a mapping relationship between the physical channel and/or the reference signal and the second TCI state; or a mapping relationship between the physical channel and/or the reference signal and the first TCI state and the second TCI state.

In the present disclosure, various mapping relationships are provided, which is applicable for configuring the mapping relationships between different TCI states and different physical channels and/or reference signals, the corresponding TCI state is selected for the transmission of the physical channel and/or the reference signal, so that the terminal and the network device are consistent in use of the TCI state, thereby improving the signal quality of the multi-TRP transmission based on the TCI state.

In an implementation, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through at least one of: a transmission method based on frequency division multiplexing (FDM); a transmission method based on time division multiplexing (TDM); a transmission method based on a demodulation reference signal (DMRS) port for at least two code division multiplexing (CDM) groups; a transmission method based on a single-frequency network (SFN); or a transmission method based on coherent joint transmission.

In the present disclosure, when there is the mapping relationship between the physical channel and/or the reference signal and the multiple TCI states, the corresponding TCI state can be selected in a variety of ways to perform the transmission of the physical channel and/or the reference signal, so that the terminal and the network device are consistent in use of the TCI state, thereby improving the signal quality of the multi-TRP transmission based on the TCI state.

In an implementation, in response to the physical channel being a PUSCH and/or a PDSCH, the determining module 202 is further configured to perform at least one of: in response to the second information being carried by first DCI and the first information indicating one TCI state, not expecting by the terminal the second information to indicate a mapping relationship between the physical channel and/or the reference signal and multiple TCI states; in response to the second information indicating the mapping relationship between the physical channel and/or the reference signal and the first TCI state, and the first information indicating the second TCI state, determining that the terminal does not transmit the PUSCH and/or the PDSCH, or determining that the terminal uses a historical first TCI state to transmit the PUSCH and/or the PDSCH, in which the historical first TCI state is a first TCI state determined by historical first information, and the historical first information is other first information received before receiving the first information; in response to the second information indicating the mapping relationship between the physical channel and/or the reference signal and the first TCI state and the second TCI state, and the first information indicating the second TCI state, determining that the terminal does not transmit the PUSCH and/or the PDSCH, or determining that the terminal transmits the PUSCH and/or the PDSCH based on the second TCI state, or determining that the terminal uses the historical first TCI state and the second TCI state to transmit the PUSCH and/or the PDSCH.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the first DCI, the physical channel includes at least one of: a PUSCH triggered based on DCI format 0_1 or DCI format 0_2; a configured grant (CG) type 2 PUSCH activated based on DCI format 0_1 or DCI format 0_2; a PDSCH triggered based on DCI format 1_0, DCI format 1_1, or DCI format 1_2.

The present disclosure is applicable to a variety of different PUSCH and PDSCH scenarios, and the corresponding TCI state can be selected for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state, and the first information indicating the second TCI state, the second information is carried by at least one of: a first radio resource control (RRC); a first MAC CE; or a second DCI.

The present disclosure provides a variety of manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the first RRC and/or the first MAC CE, the second information configures information for the PUSCH, the information including at least one of: one piece of sounding reference signal (SRS) resource indication information; one field layer; one precoding information and number of layers; one transmitted precoding matrix indicator (TPMI); one SRS resource set; one pathloss reference signal; or one power control parameter set.

In the present disclosure, the second information configures various parameters for the PUSCH so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the second DCI, the second information indicating the mapping relationship between the physical channel and/or the reference signal and the first TCI state includes at least one of: the second information determining a mapping relationship between the PUSCH and the first TCI state based on SRS resource set indication information in DCI format 0_1 or DCI format 0_2, in which the SRS resource set indication information corresponds to an SRS resource set; the second information determining the mapping relationship between the PDSCH and the first TCI state based on a TCI association field in DCI format 1_0, DCI format 1_1 or DCI format 1_2.

The present disclosure provides various types of DCIs for determining the mapping relationship, so as to select corresponding TCI states for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state and the second TCI state, and the first information indicating the second TCI state, the second information is carried by at least one of: a second RRC; a second MAC CE; or a third DCI.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the second RRC and/or the second MAC CE, the second information configures information for the PUSCH, the information including at least one of: one piece of SRS resource set indication information; two pieces of SRS resource indication information; two field layers; two precoding information and number of layers; two TPMIs; two SRS resource sets; two pathloss reference signals; or two power control parameter sets.

In the present disclosure, the second information configures various parameters for the PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the PUSCH is a CG type 1 PUSCH.

The present disclosure is applicable to the case of CG type 1 PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the third DCI, the second information indicating the mapping relationship between the physical channel and/or the reference signal and the first TCI state and the second TCI state includes at least one of: the second information determining a mapping relationship between the PUSCH and the first TCI state and the second TCI state based on SRS resource set indication information in DCI format 0_1 or DCI format 0_2, in which the SRS resource set indication information corresponds to two SRS resource sets; or the second information determining a mapping relationship between the PDSCH and the first TCI state and the second TCI state based on a TCI association field in DCI format 1_0, DCI format 1_1, or DCI format 1_2.

The present disclosure provides various types of DCI for determining the mapping relationship, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the PUSCH includes at least one of: a PUSCH triggered based on DCI format 0_1 or DCI format 0_2; or a CG type 2 PUSCH activated based on DCI format 0_1 or DCI format 0_2.

The present disclosure is applicable to various PUSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In an implementation, the PDSCH includes at least one of: a PDSCH triggered based on DCI format 1_0, a PDSCH triggered based on DCI format 1_1 or a PDSCH triggered based on DCI format 1_2.

The present disclosure is applicable to various PDSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In an implementation, in response to the physical channel being a PUCCH and/or a PDCCH, the determining module 202 is further configured to perform at least one of: in response to the second information indicating the mapping relationship between the physical channel and/or the reference signal and the first TCI state, and the first information indicating the second TCI state, determining that the terminal does not transmit the PUCCH and/or the PDCCH, or determining that the terminal uses a historical first TCI state to transmit the PUCCH and/or the PDCCH, in which the historical first TCI state is a first TCI state determined by the historical first information, and the historical first information is other first information received before receiving the first information; or in response to the second information indicating the mapping relationship between the physical channel and/or the reference signal and the first TCI state and the second TCI state, and the first information indicating the second TCI state, determining that the terminal does not transmit the PUCCH and/or the PDCCH, or determining that the terminal transmits the PUCCH and/or the PDCCH based on the second TCI state, or determining that the terminal uses the historical first TCI state and the second TCI state to transmit the PUCCH and/or the PDCCH.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state, and the first information indicating the second TCI state, the second information is carried by at least one of: a third RRC; or a third MAC CE.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the third RRC and/or the third MAC CE, the second information configures information for the PUCCH, the information including at least one of: one piece of spatial-relation-info; one TCI state; one power control parameter set; one SRS resource set; or one pathloss reference signal.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or reference signal and the first TCI state and the second TCI state, and the first information indicating the second TCI state, the second information is carried by at least one of: a fourth RRC; or a fourth MAC CE.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the fourth RRC and/or the fourth MAC CE, the second information configures information for the PUCCH, the information including at least one of: two pieces of spatial-relation-info; two TCI states; two power control parameter sets; two SRS resource sets; or two pathloss reference signals.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the first information is carried by a fifth MAC CE, or the first information is carried by a sixth MAC CE and a fourth DCI.

The present disclosure provides various manners for carrying the first information, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, in response to the first information being carried by the fifth MAC CE, the fifth MAC CE is used to indicate the N TCI states, and the N TCI states correspond to one codepoint in a TCI indication field in a DCII.

In the present disclosure, the first information can indicate the codepoint of the TCI indication field in the DCI through the MAC CE, thereby determining the multiple TCI states, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

In the present disclosure, the first information can indicate the multiple TCI states corresponding to one codepoint through the MAC CE and the DCI together, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, the N TCI states are used to determine a quasi co-location relationship between the physical channel and/or a DMRS corresponding to the physical channel and the reference signal.

In the present disclosure, the quasi co-location relationship between physical channel and/or reference signal can be determined through the TCI state, so as to transmit the physical channel and/or the reference signal.

Fig. 7 is a schematic block diagram of another communication apparatus according to an exemplary embodiment. Referring to Fig. 7, the apparatus 300 is configured in a network device, and the apparatus 300 includes: a sending module 301, which is configured to send first information to a terminal, the first information being used by the terminal to determine N TCI states, where N is a positive integer; the sending module 301 being also configured to send second information to the terminal, the second information being used by the terminal to determine a mapping relationship between a physical channel and/or a reference signal and the N TCI states; and a transmission module 302, configured to transmit the physical channel and/or the reference signal based on the N TCI states and the mapping relationship.

In the present disclosure, the mapping relationship between the physical channel and/or the reference signal and the multiple TCI states is determined through the second information, the corresponding TCI state is selected for performing the transmission of the physical channel and/or the reference signal, so that the terminal and the network device are consistent in use of the TCI state, thereby improving the signal quality of the multi-TRP transmission based on the TCI state.

In an implementation, the apparatus 300 further includes: a determining module 303, configured to determine a transmission mode for transmitting the physical channel and/or the reference signal, and/or a TCI state corresponding to the physical channel and/or the reference signal based on the N TCI states and the mapping relationship; the transmission module 302 being also configured to perform the transmission of the physical channel and/or the reference signal based on the transmission mode for transmitting the physical channel and/or the reference signal, and/or the TCI state corresponding to the physical channel and/or the reference signal.

In the present disclosure, the transmission mode for transmitting the physical channel and/or the reference signal, and/or the TCI state corresponding to the physical channel and/or the reference signal is determined through the first information and the second information, and thus the corresponding transmission mode and the TCI state are selected for transmission of the physical channel and/or the reference signal, so that the terminal and the network device are consistent in use of the TCI state, thereby improving the signal quality of the multi-TRP transmission based on the TCI state..

In an implementation, the N TCI states include at least one of: a first TCI state; or a second TCI state different from the first TCI state.

In the present disclosure, the configuration of at least two TCI states is provided, so as to determine the mapping relationship between the physical channel and/or the reference signal and the at least two TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the mapping relationship includes at least one of: a mapping relationship between the physical channel and/or the reference signal and the first TCI state; a mapping relationship between the physical channel and/or the reference signal and the second TCI state; or a mapping relationship between the physical channel and/or the reference signal and the first TCI state and the second TCI state.

In the present disclosure, various mapping relationships are provided, which is applicable for configuring the mapping relationships between different TCI states and different physical channels and/or reference signals, the corresponding TCI state is selected for the transmission of the physical channel and/or the reference signal, so that the terminal and the network device are consistent in use of the TCI state, thereby improving the signal quality of the multi-TRP transmission based on the TCI state.

In an implementation, in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal is configured to be performed through at least one of: a transmission method based on frequency division multiplexing (FDM); a transmission method based on time division multiplexing (TDM); a transmission method based on a demodulation reference signal (DMRS) port for at least two code division multiplexing (CDM) groups; a transmission method based on a single-frequency network (SFN); or a transmission method based on coherent joint transmission.

In the present disclosure, when there is the mapping relationship between the physical channel and/or the reference signal and the multiple TCI states, the corresponding TCI state can be selected in a variety of ways to perform the transmission of the physical channel and/or the reference signal, so that the terminal and the network device are consistent in use of the TCI state, thereby improving the signal quality of the multi-TRP transmission based on the TCI state.

In an implementation, in response to the physical channel being a PUSCH and/or a PDSCH, the determining module 303 is further configured to perform at least one of: in response to the second information being carried by first DCI and the first information indicating one TCI state, the second information not indicating a mapping relationship between the physical channel and/or the reference signal and multiple TCI states; in response to the second information indicating the mapping relationship between the physical channel and/or the reference signal and the first TCI state, and the first information indicating the second TCI state, determining that the network device does not transmit the PUSCH and/or the PDSCH, or determining that the network device uses a historical first TCI state to transmit the PUSCH and/or the PDSCH, in which the historical first TCI state is a first TCI state determined by historical first information, and the historical first information is other first information sent before sending the first information; in response to the second information indicating the mapping relationship between the physical channel and/or the reference signal and the first TCI state and the second TCI state, and the first information indicating the second TCI state, determining that the network device does not transmit the PUSCH and/or the PDSCH, or determining that the network device transmits the PUSCH and/or the PDSCH based on the second TCI state, or determining that the network device uses the historical first TCI state and the second TCI state to transmit the PUSCH and/or the PD SCH.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the first DCI, the physical channel includes at least one of: a PUSCH triggered based on DCI format 0_1 or DCI format 0_2; a configured grant (CG) type 2 PUSCH activated based on DCI format 0_1 or DCI format 0_2; a PDSCH triggered based on DCI format 1_0, DCI format 1_1, or DCI format 1_2.

The present disclosure is applicable to a variety of different PUSCH and PDSCH scenarios, and the corresponding TCI state can be selected for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state, and the first information indicating the second TCI state, the second information is carried in at least one of: a first RRC; a first MAC CE; or a second DCI.

The present disclosure provides a variety of manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the first RRC and/or the first MAC CE, the second information configures information for the PUSCH, the information including at least one of: one piece of SRS resource indication information; one field layer; one precoding information and number of layers; one TPMI; one SRS resource set; one pathloss reference signal; or one power control parameter set.

In the present disclosure, the second information configures various parameters for the PUSCH so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the second DCI, the second information indicating the mapping relationship between the physical channel and/or the reference signal and the first TCI state includes at least one of: the second information determining a mapping relationship between the PUSCH and the first TCI state based on SRS resource set indication information in DCI format 0_1 or DCI format 0_2, in which the SRS resource set indication information corresponds to an SRS resource set; the second information determining the mapping relationship between the PDSCH and the first TCI state based on a TCI association field in DCI format 1_0, DCI format 1_1 or DCI format 1_2.

The present disclosure provides various types of DCIs for determining the mapping relationship, so as to select corresponding TCI states for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state and the second TCI state, and the first information indicating the second TCI state, the second information is carried by at least one of: a second RRC; a second MAC CE; or a third DCI.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the second RRC and/or the second MAC CE, the second information configures information for the PUSCH, the information including at least one of: one piece of SRS resource set indication information; two pieces of SRS resource indication information; two field layers; two precoding information and number of layers; two TPMIs; two SRS resource sets; two pathloss reference signals; or two power control parameter sets.

In the present disclosure, the second information configures various parameters for the PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the PUSCH is a CG type 1 PUSCH.

The present disclosure is applicable to the case of CG type 1 PUSCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the third DCI, the second information indicating the mapping relationship between the physical channel and/or the reference signal and the first TCI state and the second TCI state includes at least one of: the second information determining a mapping relationship between the PUSCH and the first TCI state and the second TCI state based on SRS resource set indication information in DCI format 0_1 or DCI format 0_2, in which the SRS resource set indication information corresponds to two SRS resource sets; or the second information determining a mapping relationship between the PDSCH and the first TCI state and the second TCI state based on a TCI association field in DCI format 1_0, DCI format 1_1, or DCI format 1_2.

The present disclosure provides various types of DCI for determining the mapping relationship, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the PUSCH includes at least one of: a PUSCH triggered based on DCI format 0_1 or DCI format 0_2; or a CG type 2 PUSCH activated based on DCI format 0_1 or DCI format 0_2.

The present disclosure is applicable to various PUSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In an implementation, the PDSCH includes at least one of: a PDSCH triggered based on DCI format 1_0, a PDSCH triggered based on DCI format 1_1 or a PDSCH triggered based on DCI format 1_2.

The present disclosure is applicable to various PDSCH cases, so as to select the corresponding TCI state in the corresponding case for transmission of the physical channel and/or the reference signal, so that the terminal and the network device are consistent in use of the TCI state, thereby improving the signal quality of the multi-TRP transmission based on the TCI state.

In an implementation, in response to the physical channel being a PUCCH and/or a PDCCH, the determining module 303 is further configured to perform at least one of: in response to the second information indicating the mapping relationship between the physical channel and/or the reference signal and the first TCI state, and the first information indicating the second TCI state, determining that the network device does not transmit the PUCCH and/or the PDCCH, or determining that the network device uses a historical first TCI state to transmit the PUCCH and/or the PDCCH, in which the historical first TCI state is a first TCI state determined by the historical first information, and the historical first information is other first information sent before sending the first information; or in response to the second information indicating the mapping relationship between the physical channel and/or the reference signal and the first TCI state and the second TCI state, and the first information indicating the second TCI state, determining that the network device does not transmit the PUCCH and/or the PDCCH, or determining that the network device transmits the PUCCH and/or the PDCCH based on the second TCI state, or determining that the network device uses the historical first TCI state and the second TCI state to transmit the PUCCH and/or the PDCCH.

In the present disclosure, the transmission mode for transmitting the physical channel and/or the reference signal, and/or the TCI state corresponding to the physical channel and/or the reference signal is determined in various manners, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or the reference signal and the first TCI state, and the first information indicating the second TCI state, the second information is carried by at least one of: a third RRC; or a third MAC CE.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the third RRC and/or the third MAC CE, the second information configures information for the PUCCH, the information including at least one of: one piece of spatial-relation-info; one TCI state; one power control parameter set; one SRS resource set; or one pathloss reference signal.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information indicating the mapping relationship between the physical channel and/or reference signal and the first TCI state and the second TCI state, and the first information indicating the second TCI state, the second information is carried by at least one of: a fourth RRC; or a fourth MAC CE.

The present disclosure provides various manners for carrying the second information, so as to determine the mapping relationship between the physical channel and/or the reference signal and the multiple TCI states through the second information, and to select the corresponding TCI state for transmission of the physical channel and/or the reference signal, so that the terminal and the network device are consistent in use of the TCI state, thereby improving the signal quality of the multi-TRP transmission based on the TCI state.

In an implementation, in response to the second information being carried by the fourth RRC and/or the fourth MAC CE, the second information configures information for the PUCCH, the information including at least one of: two pieces of spatial-relation-info; two TCI states; two power control parameter sets; two SRS resource sets; or two pathloss reference signals.

In the present disclosure, the second information configures various parameters for the PUCCH, so as to select the corresponding TCI state for transmission of the physical channel and/or the reference signal, so that the terminal and the network device are consistent in use of the TCI state, thereby improving the signal quality of the multi-TRP transmission based on the TCI state.

In an implementation, the first information is carried by a fifth MAC CE, or the first information is carried by a sixth MAC CE and a fourth DCI.

The present disclosure provides various manners for carrying the first information, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, in response to the first information being carried by the fifth MAC CE, the fifth MAC CE is used to indicate the N TCI states, and the N TCI states correspond to one codepoint in a TCI indication field in a DCI.

In the present disclosure, the first information can indicate the codepoint of the TCI indication field in the DCI through the MAC CE, thereby determining the multiple TCI states, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

In the present disclosure, the first information can indicate the multiple TCI states corresponding to one codepoint through the MAC CE and the DCI together, so as to select the corresponding TCI state through the first information for transmission of the physical channel and/or the reference signal, so that the terminal and the network device are consistent in use of the TCI state, thereby improving the signal quality of the multi-TRP transmission based on the TCI state.

In an implementation, the N TCI states are used to determine a quasi co-location relationship between the physical channel and/or a DMRS corresponding to the physical channel and the reference signal.

In the present disclosure, the quasi co-location relationship between physical channel and/or reference signal can be determined through the TCI state, so as to transmit the physical channel and/or the reference signal.

Regarding the apparatuses in the above embodiments, the specific manners in which each module performs operations have been described in detail in the embodiments of the methods, and will not be elaborated here.

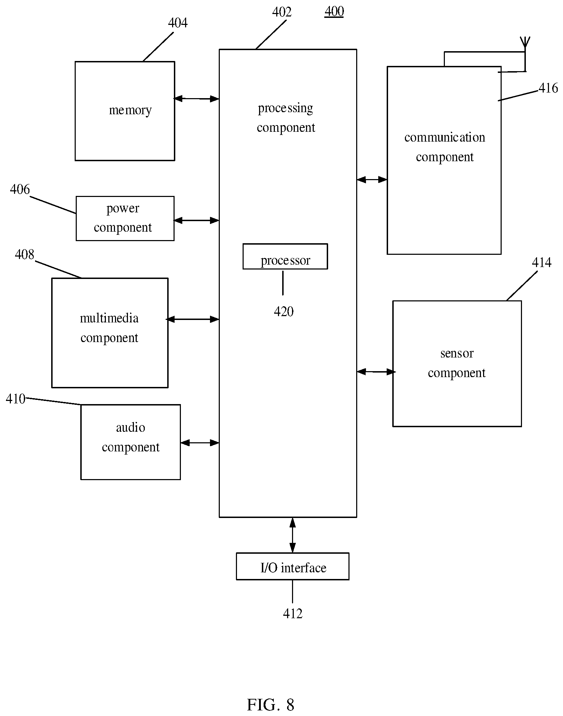

Fig. 8 is a schematic block diagram of a communication device according to an exemplary embodiment. For example, the device 400 may be any terminal, such as a mobile phone, a computer, a digital broadcast terminal, a messaging device, a game console, a tablet device, a medical device, a fitness device, a personal digital assistant, etc.

Referring to Fig. 8, the device 400 may include one or more of: a processing component 402, a memory 404, a power component 406, a multimedia component 408, an audio component 410, an input/output (I/O) interface 412, and a sensor component 414, and a communication component 416.

The processing component 402 generally controls the overall operations of the device 400, such as operations associated with display, phone calls, data communications, camera operations, and recording operations. The processing component 402 may include one or more processors 420 to execute instructions to complete all or part of the steps of the above method. Additionally, the processing component 402 may include one or more modules that facilitate interaction between processing component 402 and other components. For example, the processing component 402 may include a multimedia module to facilitate interaction between the multimedia component 408 and the processing component 402.

The memory 404 is configured to store various types of data to support operations at the device 400. Examples of such data include instructions for any application or method operating on the device 400, contact data, phonebook data, messages, pictures, videos, etc. The memory 404 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power supplies, and other components associated with generating, managing, and distributing power to the device 400.

The multimedia component 408 includes a screen that provides an output interface between the device 400 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 408 includes a front-facing camera and/or a rear-facing camera. When the device 400 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 410 is configured to output and/or input an audio signal. For example, the audio component 410 includes a microphone (MIC) configured to receive the external audio signal when the device 400 is in an operating mode, such as a call mode, a recording mode, and a speech recognition mode. The received audio signal may be further stored in the memory 404 or sent via the communication component 416. In some embodiments, the audio component 410 also includes a speaker for outputting audio signals.

The I/O interface 412 provides an interface between the processing component 402 and a peripheral interface module. The peripheral interface module may be a keyboard, a click wheel, a button, etc. These button may include, but is not limited to: a home button, a volume button, a start button, and a lock button.

The sensor component 414 includes one or more sensors that provide various aspects of status assessment for the device 400. For example, the sensor component 414 may detect the open/closed state of the device 400, the relative positioning of components, such as a display and a keypad of the device 400, the sensor component 414 may also detect a position change of the device 400 or a component of the device 400, presence or absence of user contact with the device 400, an orientation or an acceleration/deceleration of the device 400, and a temperature change of the device 400. The sensor component 414 may include a proximity sensor configured to detect presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as Wi-Fi, 2G, or 3G, or their combination. In an exemplary embodiment, the communication component 416 receives a broadcast signal or broadcast related information from an external broadcast management system via a broadcast channel. In an exemplary embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 400 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, there is also provided a non-transitory computer-readable storage medium including instructions, such as the memory 404 including instructions. The instructions can be executed by the processor 420 of the device 400 to perform the above methods. For example, the non-transitory computer-readable storage medium may be a ROM, a random access memory (RAM), a CD-ROM, a magnetic tape, a floppy disk, an optical data storage device, etc.

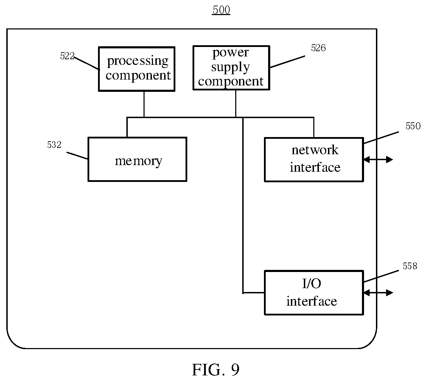

Fig. 9 is a schematic block diagram of another communication device according to an exemplary embodiment. For example, device 500 may be provided as a base station, or a server. Referring to Fig. 9, the network device 500 includes a processing component 522, which further includes at least one processor, and a memory resource represented by a memory 532 for storing instructions executable by the processing component 522, such as an application. The application stored in the memory 532 may include one or more modules, each of which corresponds to a set of instructions. In addition, the processing component 522 is configured to execute instructions to perform any methods.

The network device 500 may further include a power supply component 526 configured to perform power management of the network device 500, a wired or wireless network interface 550 configured to connect the network device 500 to a network, and an input/output (I/O) interface 558. The network device 500 may operate based on an operating system stored in the memory 532, such as Windows Server^{™}, Mac OS X^{™}, Unix^{™}, Linux^{™}, FreeBSD^{™} or the like.

In the present disclosure, it is proposed in a case of the indicated TCI state of single-DCI multi-TRP, when the first information indicates a set of TCI states, how to determine the TCI state of the physical channel and/or the reference signal associated with two TCI states or another TCI state, which allows the terminal and the base station to maintain a consistent understanding of adoption of the TCI state, thereby improving the signal quality of the multi-TRP transmission based on the indicated TCI state.

It is further understood that in the present disclosure, "a plurality of" refers to two or more than two, and other quantifiers are similar thereto. The term "and/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "an", and "the" are also intended to include plural forms, unless the context clearly indicates other meanings.

It is further understood that the terms "first", "second", etc., are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that the meanings of the terms "in response to" and "if" involved in the present disclosure depend on the context and the actual usage scenarios. For example, the word "in response to" used herein can be interpreted as "when", or "if", or "in a case that".

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the present disclosure. The present disclosure is intended to cover any modifications, uses or adaptations of the present disclosure, which follow the general principles of the present disclosure and include common knowledge or customary technical means in the art that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A communication method, performed by a terminal, comprising:
receiving first information sent by a network device, and determining N transmission configuration indication (TCI) states based on the first information, where N is a positive integer;
receiving second information sent by the network device, and determining a mapping relationship between a physical channel and/or a reference signal and the N TCI states based on the second information; and
performing transmission of the physical channel and/or the reference signal based on the N TCI states and the mapping relationship.

2. The method according to claim 1, wherein performing the transmission of the physical channel and/or the reference signal based on the N TCI states and the mapping relationship comprises:
determining, based on the N TCI states and the mapping relationship, a transmission mode for transmitting the physical channel and/or the reference signal, and/or a TCI state corresponding to the physical channel and/or the reference signal; and
performing the transmission of the physical channel and/or the reference signal based on the transmission mode for transmitting the physical channel and/or the reference signal, and/or the TCI state corresponding to the physical channel and/or the reference signal.

3. The method according to claim 2, wherein the N TCI states comprises at least one of:
a first TCI state; or
a second TCI state different from the first TCI state.

4. The method according to claim 3, wherein the mapping relationship comprises at least one of:
a mapping relationship between the physical channel and/or the reference signal and the first TCI state;
a mapping relationship between the physical channel and/or the reference signal and the second TCI state; or
a mapping relationship between the physical channel and/or the reference signal and the first TCI state and the second TCI state.

5. The method according to claim 4, wherein in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through at least one of:
a transmission method based on frequency division multiplexing (FDM);
a transmission method based on time division multiplexing (TDM);
a transmission method based on a demodulation reference signal (DMRS) port for at least two code division multiplexing (CDM) groups;
a transmission method based on single-frequency network (SFN); or
a transmission method based on coherent joint transmission.

6. The method according to any one of claims 3 to 5, wherein in response to the physical channel being a physical uplink shared channel (PUSCH) and/or a physical downlink shared channel (PDSCH), determining, based on the N TCI states and the mapping relationship, the transmission mode for transmitting the physical channel and/or the reference signal, and/or the TCI state corresponding to the physical channel and/or the reference signal, comprises at least one of:
in response to the second information being carried by first downlink control information (DCI) and the first information indicating one TCI state, not expecting the second information to indicate a mapping relationship between the physical channel and/or the reference signal and multiple TCI states;
in response to the second information indicating the mapping relationship between the physical channel and/or the reference signal and the first TCI state, and the first information indicating the second TCI state, determining that the terminal does not transmit the PUSCH and/or the PDSCH, or determining that the terminal uses a historical first TCI state to transmit the PUSCH and/or the PDSCH, wherein the historical first TCI state is a first TCI state determined by historical first information, and the historical first information is other first information received before receiving the first information; or
in response to the second information indicating the mapping relationship between the physical channel and/or the reference signal and the first TCI state and the second TCI state, and the first information indicating the second TCI state, determining that the terminal does not transmit the PUSCH and/or the PDSCH, or determining that the terminal transmits the PUSCH and/or the PDSCH based on the second TCI state, or determining that the terminal uses the historical first TCI state and the second TCI state to transmit the PUSCH and/or the PDSCH.

7. The method according to claim 6, wherein in response to the second information being carried by the first DCI, the physical channel comprises at least one of:
a PUSCH triggered based on DCI format 0_1 or DCI format 0_2;
a configured grant (CG) type 2 PUSCH activated based on DCI format 0_1 or DCI format 0_2; or
a PDSCH triggered based on DCI format 1_0, DCI format 1_1, or DCI format 1_2.

8. The method according to claim 6, wherein in response to the second information indicating the mapping relationship between the physical channel and/or the reference signal and the first TCI state, and the first information indicating the second TCI state, the second information is carried by at least one of:
a first radio resource control (RRC);
a first medium access control control element (MAC CE); or
a second DCI.

9. The method according to claim 8, wherein in response to the second information being carried by the first RRC and/or the first MAC CE, the second information configures information for the PUSCH, the information comprising at least one of:
one piece of sounding reference signal (SRS) resource indication information;
one field layer;
one precoding information and number of layers;
one transmitted precoding matrix indicator (TPMI);
one SRS resource set;
one pathloss reference signal; or
one power control parameter set.

10. The method according to claim 8, wherein in response to the second information being carried by the second DCI, the second information indicating the mapping relationship between the physical channel and/or the reference signal and the first TCI state comprises at least one of:
the second information determining a mapping relationship between the PUSCH and the first TCI state based on SRS resource set indication information in DCI format 0_1 or DCI format 0_2, wherein the SRS resource set indication information corresponds to an SRS resource set; or
the second information determining a mapping relationship between the PDSCH and the first TCI state based on a TCI association field in DCI format 1_0, DCI format 1_1 or DCI format 1_2.

11. The method according to claim 6, wherein in response to the second information indicating the mapping relationship between the physical channel and/or the reference signal and the first TCI state and the second TCI state, and the first information indicating the second TCI state, the second information is carried by at least one of:
a second RRC;
a second MAC CE; or
a third DCI.

12. The method according to claim 11, wherein in response to the second information being carried by the second RRC and/or the second MAC CE, the second information configures information for the PUSCH, the information comprising at least one of:
one piece of SRS resource set indication information;
two pieces of SRS resource indication information;
two field layers;
two precoding information and number of layers;
two TPMIs;
two SRS resource sets;
two pathloss reference signals; or
two power control parameter sets.

13. The method according to claim 9 or 12, wherein the PUSCH is a CG type 1 PUSCH.

14. The method according to claim 11, wherein in response to the second information being carried by the third DCI, the second information indicating the mapping relationship between the physical channel and/or the reference signal and the first TCI state and the second TCI state comprises at least one of:
the second information determining a mapping relationship between the PUSCH and the first TCI state and the second TCI state based on SRS resource set indication information in DCI format 0_1 or DCI format 0_2, wherein the SRS resource set indication information corresponds to two SRS resource sets; or
the second information determining a mapping relationship between the PDSCH and the first TCI state and the second TCI state based on a TCI association field in DCI format 1_0, DCI format 1_1 or DCI format 1_2.

15. The method according to claim 10 or 14, wherein the PUSCH comprises at least one of:
a PUSCH triggered based on DCI format 0_1 or DCI format 0_2; or
a CG type 2 PUSCH activated based on DCI format 0_1 or DCI format 0_2.

16. The method according to claim 10 or 14, wherein the PDSCH comprises at least one of:
a PDSCH triggered based on DCI format 1_0, a PDSCH triggered based on DCI format 1_1, or a PDSCH triggered based on DCI format 1_2.

17. The method according to any one of claims 3 to 5, wherein in response to the physical channel being a physical uplink control channel (PUCCH) and/or a physical downlink control channel (PDCCH), determining, based on the N TCI states and the mapping relationship, the transmission mode for transmitting the physical channel and/or the reference signal, and/or the TCI state corresponding to the physical channel and/or the reference signal, comprises at least one of:
in response to the second information indicating the mapping relationship between the physical channel and/or the reference signal and the first TCI state, and the first information indicating the second TCI state, determining that the terminal does not transmit the PUCCH and/or the PDCCH, or determining that the terminal uses a historical first TCI state to transmit the PUCCH and/or the PDCCH, wherein the historical first TCI state is a first TCI state determined by historical first information, and the historical first information is other first information received before receiving the first information; or
in response to the second information indicating the mapping relationship between the physical channel and/or the reference signal and the first TCI state and the second TCI state, and the first information indicating the second TCI state, determining that the terminal does not transmit the PUCCH and/or the PDCCH, or determining that the terminal transmits the PUCCH and/or the PDCCH based on the second TCI state, or determining that the terminal uses the historical first TCI state and the second TCI state to transmit the PUCCH and/or the PDCCH.

18. The method according to claim 17, wherein in response to the second information indicating the mapping relationship between the physical channel and/or the reference signal and the first TCI state, and the first information indicating the second TCI state, the second information is carried by at least one of:
a third RRC; or
a third MAC CE.

19. The method according to claim 18, wherein in response to the second information being carried by the third RRC and/or the third MAC CE, the second information configures information for the PUCCH, the information comprising at least one of:
one piece of spatial-relation-info;
one TCI state;
one power control parameter set;
one SRS resource set; or
one pathloss reference signal.

20. The method according to claim 17, wherein in response to the second information indicating the mapping relationship between the physical channel and/or the reference signal and the first TCI state and the second TCI state, and the first information indicating the second TCI state, the second information is carried by at least one of:
a fourth RRC; or
a fourth MAC CE.

21. The method according to claim 20, wherein in response to the second information being carried by the fourth RRC and/or the fourth MAC CE, the second information configures information for the PUCCH, the information comprising at least one of:
two pieces of spatial-relation-info;
two TCI states;
two power control parameter sets;
two SRS resource sets; or
two pathloss reference signals.

22. The method according to any one of claims 1-21, wherein the first information is carried by a fifth MAC CE, or the first information is carried by a sixth MAC CE and a fourth DCI.

23. The method according to claim 22, wherein in response to the first information being carried by the fifth MAC CE, the fifth MAC CE is used to indicate the N TCI states, and the N TCI states correspond to one codepoint in a TCI indication field in a DCI.

24. The method according to claim 22, wherein in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

25. The method according to any one of claims 1-24, wherein the N TCI states are used to determine a quasi co-location relationship between the physical channel and/or a DMRS corresponding to the physical channel and the reference signal.

26. A communication method, performed by a network device, comprising:
sending first information to a terminal, the first information being used by the terminal to determine N transmission configuration indication (TCI) states, where N is a positive integer;
sending second information to the terminal, the second information being used by the terminal to determine a mapping relationship between a physical channel and/or a reference signal and the N TCI states; and
performing transmission of the physical channel and/or the reference signal based on the N TCI states and the mapping relationship.

27. The method according to claim 26, wherein performing the transmission of the physical channel and/or the reference signal based on the N TCI states and the mapping relationship comprises:
determining, based on the N TCI states and the mapping relationship, a transmission mode for transmitting the physical channel and/or the reference signal, and/or a TCI state corresponding to the physical channel and/or the reference signal; and
performing the transmission of the physical channel and/or the reference signal based on the transmission mode for transmitting the physical channel and/or the reference signal, and/or the TCI state corresponding to the physical channel and/or the reference signal.

28. The method according to claim 27, wherein the N TCI states comprises at least one of:
a first TCI state; or
a second TCI state different from the first TCI state.

29. The method according to claim 28, wherein the mapping relationship comprises at least one of:
a mapping relationship between the physical channel and/or the reference signal and the first TCI state;
a mapping relationship between the physical channel and/or the reference signal and the second TCI state; or
a mapping relationship between the physical channel and/or the reference signal and the first TCI state and the second TCI state.

30. The method according to claim 29, wherein in response to the mapping relationship being the mapping relationship between the physical channel and/or the reference signal and the first TCI state and the second TCI state, the transmission of the physical channel and/or the reference signal based on the transmission mode for transmitting the physical channel and/or the reference signal, and/or the TCI state corresponding to the physical channel and/or the reference signal, is configured to be performed through at least one of:
a transmission method based on frequency division multiplexing (FDM);
a transmission method based on time division multiplexing (TDM);
a transmission method based on a demodulation reference signal (DMRS) port for at least two code division multiplexing (CDM) groups;
a transmission method based on single-frequency network (SFN); or
a transmission method based on coherent joint transmission.

31. The method according to any one of claims 28 to 30, wherein in response to the physical channel being a physical uplink shared channel (PUSCH) and/or a physical downlink shared channel (PDSCH), determining, based on the N TCI states and the mapping relationship, the transmission mode for transmitting the physical channel and/or the reference signal, and/or the TCI state corresponding to the physical channel and/or the reference signal, comprises at least one of:
in response to the second information being carried by first downlink control information (DCI) and the first information indicating one TCI state, the second information not indicating a mapping relationship between the physical channel and/or the reference signal and multiple TCI states;
in response to the second information indicating the mapping relationship between the physical channel and/or the reference signal and the first TCI state, and the first information indicating the second TCI state, determining that the network device does not transmit the PUSCH and/or the PDSCH, or determining that the network device uses a historical first TCI state to transmit the PUSCH and/or the PDSCH, wherein the historical first TCI state is a first TCI state determined by historical first information, and the historical first information is other first information sent before sending the first information; or
in response to the second information indicating the mapping relationship between the physical channel and/or the reference signal and the first TCI state and the second TCI state, and the first information indicating the second TCI state, determining that the network device does not transmit the PUSCH and/or the PDSCH, or determining that the network device transmits the PUSCH and/or the PDSCH based on the second TCI state, or determining that the network device uses the historical first TCI state and the second TCI state to transmit the PUSCH and/or the PDSCH.

32. The method according to claim 31, wherein in response to the second information being carried by the first DCI, the physical channel comprises at least one of:
a PUSCH triggered based on DCI format 0_1 or DCI format 0_2;
a configured grant (CG) type 2 PUSCH activated based on DCI format 0_1 or DCI format 0_2; or
a PDSCH triggered based on DCI format 1_0, DCI format 1_1, or DCI format 1_2.

33. The method according to claim 31, in response to the second information indicating the mapping relationship between the physical channel and/or the reference signal and the first TCI state, and the first information indicating the second TCI state, the second information is carried by at least one of:
a first radio resource control (RRC);
a first medium access control control element (MAC CE); or
a second DCI.

34. The method according to claim 33, wherein in response to the second information being carried by the first RRC and/or the first MAC CE, the second information configures information for the PUSCH, the information comprising at least one of:
one piece of sounding reference signal (SRS) resource indication information;
one field layer;
one precoding information and number of layers;
one transmitted precoding matrix indicator (TPMI);
one SRS resource set;
one pathloss reference signal; or
one power control parameter set.

35. The method according to claim 33, wherein in response to the second information being carried by the second DCI, the second information indicating the mapping relationship between the physical channel and/or the reference signal and the first TCI state comprises at least one of:
the second information determining a mapping relationship between the PUSCH and the first TCI state based on SRS resource set indication information in DCI format 0_1 or DCI format 0_2, wherein the SRS resource set indication information corresponds to an SRS resource set; or
the second information determining a mapping relationship between the PDSCH and the first TCI state based on a TCI association field in DCI format 1_0, DCI format 1_1 or DCI format 1_2.

36. The method according to claim 31, wherein response to the second information indicating the mapping relationship between the physical channel and/or the reference signal and the first TCI state and the second TCI state, and the first information indicating the second TCI state, the second information is carried by at least one of:
a second RRC;
a second MAC CE; or
a third DCI.

37. The method according to claim 36, wherein in response to the second information being carried by the second RRC and/or the second MAC CE, the second information configures information for the PUSCH, the information comprising at least one of:
one piece of SRS resource set indication information;
two pieces of SRS resource indication information;
two field layers;
two precoding information and number of layers;
two TPMIs;
two SRS resource sets;
two pathloss reference signals; or
two power control parameter sets.

38. The method according to claim 34 or 37, wherein the PUSCH is a CG type 1 PUSCH.

39. The method according to claim 36, wherein in response to the second information being carried by the third DCI, the second information indicating the mapping relationship between the physical channel and/or the reference signal and the first TCI state and the second TCI state comprises at least one of:
the second information determining a mapping relationship between the PUSCH and the first TCI state and the second TCI state based on SRS resource set indication information in DCI format 0_1 or DCI format 0_2, wherein the SRS resource set indication information corresponds to two SRS resource sets; or
the second information determining a mapping relationship between the PDSCH and the first TCI state and the second TCI state based on a TCI association field in DCI format 1_0, DCI format 1_1 or DCI format 1_2.

40. The method according to claim 35 or 39, wherein the PUSCH comprises at least one of:
a PUSCH triggered based on DCI format 0_1 or DCI format 0_2; or
a CG type 2 PUSCH activated based on DCI format 0_1 or DCI format 0_2.

41. The method according to claim 35 or 39, wherein the PDSCH comprises at least one of:
a PDSCH triggered based on DCI format 1_0, a PDSCH triggered based on DCI format 1_1, or a PDSCH triggered based on DCI format 1_2.

42. The method according to any one of claims 28 to 30, wherein in response to the physical channel being a physical uplink control channel (PUCCH) and/or a physical downlink control channel (PDCCH), determining, based on the N TCI states and the mapping relationship, the transmission mode for transmitting the physical channel and/or the reference signal, and/or the TCI state corresponding to the physical channel and/or the reference signal, comprises at least one of:
in response to the second information indicating the mapping relationship between the physical channel and/or the reference signal and the first TCI state, and the first information indicating the second TCI state, determining that the network device does not transmit the PUCCH and/or the PDCCH, or determining that the network device uses a historical first TCI state to transmit the PUCCH and/or the PDCCH, wherein the historical first TCI state is a first TCI state determined by historical first information, and the historical first information is other first information sent before sending the first information; or
in response to the second information indicating the mapping relationship between the physical channel and/or the reference signal and the first TCI state and the second TCI state, and the first information indicating the second TCI state, determining that the network device does not transmit the PUCCH and/or the PDCCH, or determining that the network device transmits the PUCCH and/or the PDCCH based on the second TCI state, or determining that the network device uses the historical first TCI state and the second TCI state to transmit the PUCCH and/or the PDCCH.

43. The method according to claim 42, wherein in response to the second information indicating the mapping relationship between the physical channel and/or the reference signal and the first TCI state, and the first information indicating the second TCI state, the second information is carried by at least one of:
a third RRC; or
a third MAC CE..

44. The method according to claim 43, wherein in response to the second information being carried by the third RRC and/or the third MAC CE, the second information configures information for the PUCCH, the information comprising at least one of:
one piece of spatial-relation-info;
one TCI state;
one power control parameter set;
one SRS resource set; or
one pathloss reference signal.

45. The method according to claim 42, wherein in response to the second information indicating the mapping relationship between the physical channel and/or the reference signal and the first TCI state and the second TCI state, and the first information indicating the second TCI state, the second information is carried by at least one of:
a fourth RRC; or
a fourth MAC CE.

46. The method according to claim 45, wherein in response to the second information being carried by the fourth RRC and/or the fourth MAC CE, the second information configures information for the PUCCH, the information comprising at least one of:
two pieces of spatial-relation-info;
two TCI states;
two power control parameter sets;
two SRS resource sets; or
two pathloss reference signals.

47. The method according to any one of claims 26-46, wherein the first information is carried by a fifth MAC CE, or the first information is carried by a sixth MAC CE and a fourth DCI.

48. The method according to claim 47, wherein in response to the first information being carried by the fifth MAC CE, the fifth MAC CE is used to indicate the N TCI states, and the N TCI states correspond to one codepoint in a TCI indication field in a DCI.

49. The method according to claim 47, wherein in response to the first information being carried by the sixth MAC CE and the fourth DCI, the sixth MAC CE is used to indicate TCI states respectively corresponding to multiple codepoints in a TCI indication field in a DCI, and a TCI indication field in the fourth DCI is used to indicate one codepoint among the multiple codepoints.

50. The method according to any one of claims 26-49, wherein the N TCI states are used to determine a quasi co-location relationship between the physical channel and/or a DMRS corresponding to the physical channel and the reference signal.

51. A communication apparatus, configured in a terminal, comprising:
a receiving module, configured to receive first information sent by a network device;
a determining module, configured to determine N transmission configuration indication (TCI) states based on the first information, where N is a positive integer;
the receiving module being also configured to receive second information sent by the network device;
the determining module being also configured to determine a mapping relationship between a physical channel and/or a reference signal and the N TCI states based on the second information; and
a transmission module, configured to perform transmission of the physical channel and/or the reference signal based on the N TCI states and the mapping relationship.

52. A communication apparatus, configured in a network device, comprising:
a sending module, configured to send first information to a terminal, the first information being used by the terminal to determine N transmission configuration indication (TCI) states, where N is a positive integer;
the sending module being also configured to send second information to the terminal, the second information being used by the terminal to determine a mapping relationship between a physical channel and/or a reference signal and the N TCI states; and
a transmission module, configured to perform transmission of the physical channel and/or the reference signal based on the N TCI states and the mapping relationship.

53. A communication device, comprising:
a processor; and
a memory for storing instructions executable by the processor;
wherein the processor is configured to execute the method according to any one of claims 1 to 25.

54. A communication device, comprising:
a processor; and
a memory for storing instructions executable by the processor;
wherein the processor is configured to execute the method according to any one of claims 26 to 50.

55. A non-transitory computer-readable storage medium, when instructions in the storage medium are executed by a processor of a terminal, the terminal is enabled to execute the method according to any one of claims 1 to 25.

56. A non-transitory computer-readable storage medium, when instructions in the storage medium are executed by a processor of a network device, the network device is enabled to execute the method according to any one of claims 26 to 50.
